# EUROPÄISCHE PATENTSCHRIFT

(11) **EP 2 396 253 B1**
(45) Veröffentlichungstag und Bekanntmachung des Hinweises auf die Patenterteilung: **28.08.2013**
(21) Anmeldenummer: 10710768.2
(22) Anmeldetag: 11.02.2010
(51) Int. Cl.: B65G 1/137

(54) **LAGERSYSTEM UND VERFAHREN ZUM AUTOMATISIERTEN VERTEILEN VON PACKEINHEITEN**
STORAGE SYSTEM AND METHOD FOR THE AUTOMATED DISTRIBUTION OF PACKING UNITS
SYSTÈME DE STOCKAGE ET PROCÉDÉ DE RÉPARTITION AUTOMATIQUE D'UNITÉS CONDITIONNÉES

(30) Priorität: 12.02.2009 AT 2472009
(43) Veröffentlichungstag der Anmeldung: 21.12.2011
(73) Patentinhaber: TGW Logistics Group GmbH, 4600 Wels (AT)
(72) Erfinder: HANSL, Rudolf, A-4020 Linz (AT)
(74) Vertreter: Burger, Hannes
(86) Internationale Anmeldenummer: PCT/AT2010/000039
(87) Internationale Veröffentlichungsnummer: WO 2010/091446

(56) Entgegenhaltungen:
- WO-A1-2005/092753
- WO-A1-2007/124796
- WO-A1-2009/076759
- WO-A1-2009/143548
- WO-A2-2010/012450
- DE-U1- 29 724 039
- FR-A1- 2 787 771
- FR-A1- 2 897 341
- JP-A- 2003 246 421

## Beschreibung

Die Erfindung betrifft ein Verfahren zum automatisierten Verteilen von Packeinheiten und ein Lagersystem wie in den Oberbegriffen der Ansprüchen 1 und 24 beschrieben.

Ein Verfahren bzw. Lagersystem zum Verteilen von Packeinheiten ist aus der EP 2 161 220 A2 bekannt, bei dem die Packeinheiten auf einen Bereitstellungsplatz gefördert und in Förderrichtung zu Reihen gebildet und die Reihen zu einer Transportlage mit mehreren Reihen zusammengestellt werden. Die Transportlage wird von einem Transportlagen-Verteilsystem auf einer Förderfläche übernommen und zu einem Packeinheitenpuffer gefördert. Im Packeinheitenpuffer wird die Transportlage wiederum zu Reihen vereinzelt und die Reihe mittels einer Fördertechnik auf Lagerstellen verteilt.

Die gattungsgemäße WO 2007/124796 A1 offenbart ein Verfahren und ein Lagersystem zum Verteilen von Packeinheiten, bei dem die Packeinheiten auf einen Bereitstellungsplatz gefördert und in Förderrichtung zu Reihen gebildet werden, welche von einem Packeinheiten-Verteilsystem zu einem Packeinheitenpuffer gefördert und im Packeinheitenpuffer von einer Fördertechnik übernommen und auf Lagerstellen verteilt werden.

Gemäß der JP 2003-246421 A werden die Packeinheiten von Bereitstellungsplätzen vereinzelt auf ein Packeinheiten-Verteilsystem übergeben und zu einem Packeinheitenpuffer gefördert sowie im Packeinheitenpuffer von einer Fördertechnik auf Lagerstellen verteilt.

Aus der EP 1 698 573 A1 ist ein gattungsgemäßes Lagersystem und Verfahren zum automatisierten Verteilen und Kommissionieren von Packeinheiten bekannt, bei dem die Packeinheiten an Anlieferungsstationen auf Anliefergebinden übernommen, in ein Eingangslager (Palettenlager) durch ein Förderfahrzeug zwischengelagert und von Anliefergebinden entsprechend einem Nachschubauftrag depalettiert, vereinzelt und auf Tablare einzeln umgeladen werden. Eine Packeinheit ist eine kleinste Einheit einer Warensendung. Ein Paket aus mehreren mit einer Folie miteinander verschweißten Artikeln stellt eine Packeinheit dar. Die Tablare werden zu einem Zwischenpuffer (Tablarlager) gefördert und in diesem gelagert. Wird ein Kundenauftrag vom Lagerverwaltungsrechner erfasst, werden die Packeinheiten auf den Tablaren jeweils einzeln ausgelagert, in eine durch eine Beladungskonfiguration im Ladestapel definierte Beladereihenfolge sortiert und zu einer automatischen Stapelvorrichtung zugeführt. Dort angekommen, wird die Packeinheit vom Tablar abgehoben und auf eine ortsfeste Ladeplatte übergeben und danach auf einem Ausliefergebinde gemäß der Beladungskonfiguration gestapelt. Zwar wird eine weitgehend schonende Förderung der Packeinheit nach deren Ablage auf einem Tablar ermöglicht, ist jedoch durch die hohe Anzahl an zu kommissionierenden Packeinheiten eine große Anzahl an Stellplätzen im Zwischenpuffer erforderlich. Die Vielzahl von Stellplätzen verteilt sich über eine Vielzahl von Lagerregalen im Tablarlager. Damit verbunden sind ein großer Raumbedarf zum Aufstellen der Lagerregale und hohe Anschaffungskosten. Ein größeres Tablarlager verlangt nach einer zunehmenden Anzahl an teuren Förderfahrzeugen.

Die US 5,733,098 A beschreibt ein Verfahren zum Verteilen und Kommissionieren von Packeinheiten, die mittels Handhabungseinrichtungen von Ladestapeln auf Anliefergebinden entnommen und auf Förderbahnen entsprechend einem Kundenauftrag zu einer automatischen Stapelvorrichtung zugeführt und von dieser nach einer optimierten Beladungskonfiguration auf ein Ausliefergebinde gestapelt werden. Die Packeinheiten werden ohne zusätzliches Ladehilfsmittel, wie Tablar, Behälter und dgl., vereinzelt durch das Lagersystem ungeachtet ihrer Eigenschaften, wie Dimensionen und dgl., gefördert.

Die aus dem Stand der Technik bekannten Lagersysteme und Verfahren zum Verteilen und Kommissionieren von Packeinheiten weisen außerdem den Nachteil auf, dass die Packeinheiten über deren Förderweg von der Depalettierung bis zur Stapelung auf Fördertechniken transportiert werden, die jeweils auf die größte Packeinheit ausgelegt werden müssen. Werden kleine Packeinheiten auf den Fördertechniken transportiert, bleibt ein Großteil der zur Verfügung stehenden Förderfläche ungenutzt. Damit sinkt die Effizienz des Lagersystems und ist ein hoher Energiebedarf für die Fördertechniken notwendig.

Der vorliegenden Erfindung liegt die Aufgabe zugrunde, ein Verfahren zum Verteilen von Packeinheiten und ein Lagersystem zu schaffen, das sich durch seine Wirtschaftlichkeit und auch bei dem üblicherweise sehr breiten Sortiment an Artikel (Packeinheiten) durch eine hohe Durchsatzleistung auszeichnet.

Die Aufgabe der Erfindung wird durch die Maßnahmen und Merkmale der Ansprüche 1 und 24 gelöst. Von Vorteil ist, dass die Packeinheiten in jenen, die Durchsatzleistung an Packeinheiten im Lagersystem wesentlich beeinflussenden Teilabschnitten der Förderwege nicht einzeln, sondern als Transportlage aus einer Vielzahl von Packeinheiten verdichtet zum jeweiligen Packeinheitenpuffer gefördert werden. Somit kann die Anzahl an Manipulationsschritten, die zum Verteilen der Packeinheiten im Lagersystem erforderlich sind, reduziert und beispielsweise auch gegen Bruch, Erschütterungen oder Druckbelastungen und dgl. empfindlichere Packeinheiten problemlos verteilt werden. Mit anderen Worten wird eine schonende Verteilung der Packeinheiten im Lagersystem ermöglicht.

Ferner wird bei der Verteilung der Packeinheiten die Förderfläche optimal genutzt und die Versorgungsleistung von Packeinheiten für die Packeinheitenpuffer gesteigert bzw. kann das Verteilsystem für die Transportlagen mittels einfacher Fördertechnik, beispielsweise einem rechnergesteuerten Transportwagen, aufgebaut werden, wodurch erhebliche Kosten eingespart werden können.

Darüber hinaus kann durch die hohe Versorgungsleistung an Packeinheiten am Packeinheitenpuffer die installierte Leistung der Fördertechnik im Packeinheitenpuffer voll genutzt und der Packeinheitenpuffer besonders effizient betrieben werden.

Die Packeinheiten werden aus dem ersten Packeinheitenpuffer vorzugsweise zu einer "auftragsbezogenen" Transportlage zusammengestellt und zu einem von mehreren, den Aufträgen, beispielsweise Kommissionieraufträgen, zugeordneten, zweiten Packeinheitenpuffer gefördert und in diesem auf die Lagerstellen verteilt. Demnach dient das erste Packeinheitenpuffer grundsätzlich als Nachschublager, welches das gesamte Sortiment an Packeinheiten mit einer "Reichweite" von beispielsweise 0,5 bis 7 Tage enthält, während der zweite Packeinheitenpuffer die bereits einem Auftrag zugeordneten und lediglich zur Abarbeitung dieses Auftrags benötigten Packeinheiten enthält. Durch das Zusammenwirken der beiden Packeinheitenpuffer und der damit möglichen Funktionstrennung, kann die Auslagerleistung am zweiten Packeinheitenpuffer maximiert werden.

Ferner wird die Durchlaufzeit der Packeinheiten im Lagersystem, insbesondere vom Wareneingang bis zum Warenausgang, verkürzt und kann bei gleicher Größe des Lagersystems eine höhere Anzahl an Packeinheiten verteilt oder der Packeinheitenpuffer verkleinert werden.

Die Packeinheiten der Transportlage liegen vorzugsweise während deren Transport unmittelbar auf der Förderfläche des Transportlagen-Verteilsystems auf. Somit können die für jede Packeinheit zusätzlich benötigten Ladehilfsmittel, wie Tablare, Paletten, Behälter, und dgl., entfallen. Hinzu kommt, dass der Transport von Packeinheiten nicht durch die räumliche Abmessung eines Ladehilfsmittels begrenzt ist, welches beispielsweise auf das Format einer kleinen Packeinheit ausgelegt ist.

Von Vorteil ist auch die Maßnahme nach Anspruch 2, da entweder die Packeinheiten aus einer Transportlage auf einen oder mehrere Lagerstellen oder die gesamte Transportlage auf eine Lagerstelle verteilt werden.

Gemäß den Maßnahmen der Ansprüche 3 bis 5 werden die Packeinheiten zur optimierten Beladung auf der Förderfläche des Transportlagen-Verteilsystems sortiert. Nach einer ersten Ausführung der Erfindung werden die Packeinheiten nach Abmessungsklassen sortiert. Es können innerhalb einer Reihe der Transportlage stets Packeinheiten derselben Abmessungsklasse zusammengestellt werden. Durch diese Sortiermaßnahme können die Packeinheiten von der Fördertechnik im Packeinheitenpuffer gemeinsam transportiert und auf eine freie Lagerstelle abgegeben werden. Somit können Sortierschritte im Packeinheitenpuffer (Zwischenoder Auftragspuffer) entfallen und der Packeinheitenpuffer hinsichtlich der Verteilleistung maximiert werden, wodurch das Lagersystem besonders wirtschaftlich betrieben werden kann. Nach einer zweiten Ausführung der Erfindung wird zur Optimierung der Beladungsdichte an Packeinheiten auf der zur Verfügung stehenden Förderfläche bzw. in der Transportlage vorzugsweise vorab von einem Rechner anhand der vorliegenden, elektronisch erfassten Abmessungen ein optimiertes Beladungsmuster ermittelt. Somit wird eine noch bessere Verdichtung an Packeinheiten in der Transportlage erreicht.

Gemäß den Maßnahmen nach Anspruch 6 können die Packeinheiten unterschiedlicher Abmessungsklassen innerhalb einer Reihe der Transportlage vermischt werden. Beispielsweise können innerhalb einer Reihe hintereinander zwei Packeinheiten der ersten Abmessungsklasse und eine Packeinheit der zweiten Abmessungsklasse gruppiert werden, wodurch eine besonders hohe Verdichtung an Packeinheiten in der Transportlage und damit eine hohe Durchsatzleistung am Transportlagen-Verteilsystem erreicht wird.

Gemäß der Maßnahme nach Anspruch 7 werden die Packeinheiten auf der Fördertechnik durch eine Vereinzelungsvorrichtung vereinzelt und in Förderrichtung mit gegenseitigem Abstand zur Sortiervorrichtung oder Verdichtungsvorrichtung angefördert. Somit kann die Sortierfunktion und/oder die Verdichtungsfunktion auf zuverlässige Weise durchgeführt werden.

Vorteilhafte Maßnahmen sind auch in den Ansprüchen 8 bis 10 beschrieben, da die Packeinheiten in der für die Verdichtungsfunktion erforderlichen Solllage dem Bereitstellungsplatz angefördert werden und damit sichergestellt wird, dass die Packeinheiten innerhalb der Transportlage auf der Förderfläche des Transportlagen-Verteilsystems genau positioniert sind.

Gemäß der Maßnahme nach Anspruch 11 ist mittels der Fördertechnik eine optimale Verteilung, insbesondere Verlagerung der Packeinheiten zwischen einer Plattform und einer Lagerstelle, im Packeinheitenpuffer (Zwischen- und/oder Auftragspuffer) möglich. Die Lagerstelle ist beispielsweise durch einen Lagerkanal in einem Lagerregal ausgebildet. Die Fördertechnik ist mit einer, auf einer relativ zu einer Lagerstelle verstellbaren Plattform angeordneten Einund Auslagerungsvorrichtung versehen, welche eine relativ zur Plattform nach einer oder beiden Seiten ausfahrbare Ausfahreinheit und an dieser in gegenüberliegenden Endbereichen angeordnete Mitnahmeorgane aufweist. Bei der Verlagerung einer Packeinheit von der Plattform auf eine Lagerstelle, wird das in Einlagerrichtung der Packeinheit hintere Mitnahmeorgan hinter die der Plattform zugewandte Seite der Packeinheit verstellt. Bei der Verlagerung einer Packeinheit von einer Lagerstelle auf die Plattform, wird das in Auslagerrichtung der Packeinheit hintere Mitnahmeorgan hinter die der Plattform abgewandte Seite der Packeinheit verstellt. Somit wird die Packeinheit bei ihrer Verlagerungsbewegung zwischen einer Lagerstelle und der Plattform vom jeweiligen Mitnahmeorgan formschlüssig hintergriffen. Durch die Abstandsbildung zwischen den Packeinheiten und zwischen den Reihen, kann nun diese mit Vorteil einsetzbare und in der Praxis bestens bewährte Ein- und Auslagerungsvorrichtung verwendet werden. Durch diese Ein- und Auslagertechnologie wird der Abstand auch nach einem Ein- oder Auslagervorgang beibehalten. Somit ist eine zuverlässige Verteilung der Packeinheiten im Packeinheitenpuffer mit äußerst kurzen Zugriffszeiten auf die einzelnen Stellplätze an einer Lagerstelle möglich. Zusätzliche Vorrichtungen zur Abstandsbildung zwischen den Packeinheiten können im Packeinheitenpuffer entfallen.

Von Vorteil ist auch die Maßnahme nach Anspruch 12, wonach eine Transportlage zu einem Packeinheitenpuffer gefördert und gleichzeitig eine neuerliche Transportlage zusammengestellt wird. Durch diese Entkoppelung zwischen der Bildung der Transportlage und Verteilung einer Transportlage, ergibt sich ein besonders leistungsfähiges Verfahren.

Mit den Maßnahmen nach den Ansprüchen 13, 15, 18 und 20 kann die Verteilung der Packeinheiten im Packeinheitenpuffer hinsichtlich der Verteilleistung maximiert werden. Ferner kann die Anzahl der Wechselspiele reduziert werden. Unter einem Wechselspiel wird ein Vorgang verstanden, bei dem Packeinheiten von der Fördertechnik auf eine Lagerstelle oder Packeinheiten von einer Lagerstelle auf die Fördertechnik verlagert werden. Somit kann die installierte Leistung der Fördertechnik im Packeinheitenpuffer besser genutzt und die Verteilleistung an Packeinheiten im Packeinheitenpuffer maximiert werden.

Gemäß den Maßnahmen in den Ansprüchen 14 und 19 werden einzelne oder mehrere Packeinheiten auf die Lagerstellen abgegeben und somit können Packeinheiten unterschiedlicher Abmessungsklassen innerhalb einer Reihe auf unterschiedliche, leere Lagerstellen oder an Lagerstellen abgegeben werden, welche bereits eine Packeinheit derselben Abmessungsklasse enthalten. Mit dieser Verteilfunktion können im Packeinheitenpuffer Lagerstellen gebildet werden, welche Packeinheiten derselben Abmessungsklasse enthalten.

Mit der Maßnahme nach Anspruch 16 kann die Auslagerung einer Gruppe von Packeinheiten aus dem ersten Packeinheitenpuffer hinsichtlich der Auslagerleistung maximiert werden, wodurch sich ein besonders wirtschaftliches System ergibt.

Gemäß der Maßnahme nach Anspruch 17 ist ein wahlfreier Zugriff auf einzelne Packeinheiten im Packeinheitenpuffer möglich.

Werden gemäß Anspruch 21 die Packeinheiten einzeln ausgelagert, kann eine Sortierung der Packeinheiten nach dem zweiten Packeinheitenpuffer (Auftragspuffer) für einen Auftrag, beispielsweise Kommissionierauftrag, erleichtert und durch den wahlfreien Zugriff auf einzelne Packeinheiten im Packeinheitenpuffer das Auslagern hochflexibel gestaltet werden. Auch können Packeinheitengruppen aus wenigen Packeinheiten auf einfache Weise zusammengestellt werden.

Von Vorteil ist auch die Maßnahme nach Anspruch 22, da die zuvor ungeordnet in den zweiten Packeinheitenpuffer eingelagerten Packeinheiten als Gruppe aus dem Packeinheitenpuffer ausgelagert und diese entweder vor ihrer Auslagerung oder in einem anschließenden Sortierschritt von einer Sortiervorrichtung in eine definierte Reihenfolge sortiert werden.

Mit den Maßnahmen nach Anspruch 23 wird eine Feinsortierung der Packeinheiten innerhalb einer Packeinheitengruppe(n) durchgeführt und ein weiterer Optimierungsschritt zur Stapelbildung erreicht.

Schließlich ist auch die Ausgestaltung nach Anspruch 25 von Vorteil, da über eine einfach aufgebaute Verdichtungsvorrichtung eine zuverlässige Arbeitsweise zum Zusammenstellen der Reihen an Packeinheiten zu einer Transportlage möglich ist.

Zum besseren Verständnis der Erfindung wird diese anhand der nachfolgenden Figuren näher erläutert.

Es zeigen jeweils in stark schematisch vereinfachter Darstellung:
- Fig. 1: eine Draufsicht auf ein Eingangslager am Wareneingang des erfindungsgemäßen Lagersystems;
- Fig. 2: das Eingangslager nach Fig. 1 in Seitenansicht, gemäß den Linien II - II in Fig. 1;
- Fig. 3: einen Ausschnitt vom Eingangslager und Depalettiereinrichtungen des erfindungsgemäßen Lagersystems, in Draufsicht;
- Fig. 4: eine schematische Darstellung der Depalettiereinrichtungen, einer Fördertechnik für den Antransport der Packeinheiten zu einem Bereitstellungsplatz und eine Fördertechnik für den Abtransport einer Transportlage sowie einen ersten Verteilwagen;
- Fig. 5: eine Detaildarstellung aus Fig. 4 mit einer ersten Ausführung der Fördertechnik für den Antransport der Packeinheiten zu einem Bereitstellungsplatz;
- Fig. 6a, 6b: eine Detaildarstellung einer zweiten Ausführung der Fördertechnik für den Antransport der Packeinheiten zu einem Bereitstellungsplatz;
- Fig. 7: einen Zwischenpuffer und Auftragspuffer in der Einlagerebene des Zwischenpuffers und den ersten Verteilwagen, in Draufsicht und schematischer Darstellung;
- Fig. 8: den Zwischenpuffer und Auftragspuffer nach Fig. 7 in der Auslagerebene des Zwischenpuffers und einen zweiten Verteilwagen, in Draufsicht und schematischer Darstellung;
- Fig. 9: eine Draufsicht auf Beladestationen mit je einer automatischen Stapelvorrichtung und Wickelstationen des erfindungsgemäßen Lagersystems;
- Fig. 10: eine Draufsicht auf das Eingangslager am Warenausgang des erfindungsgemäßen Lagersystems.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

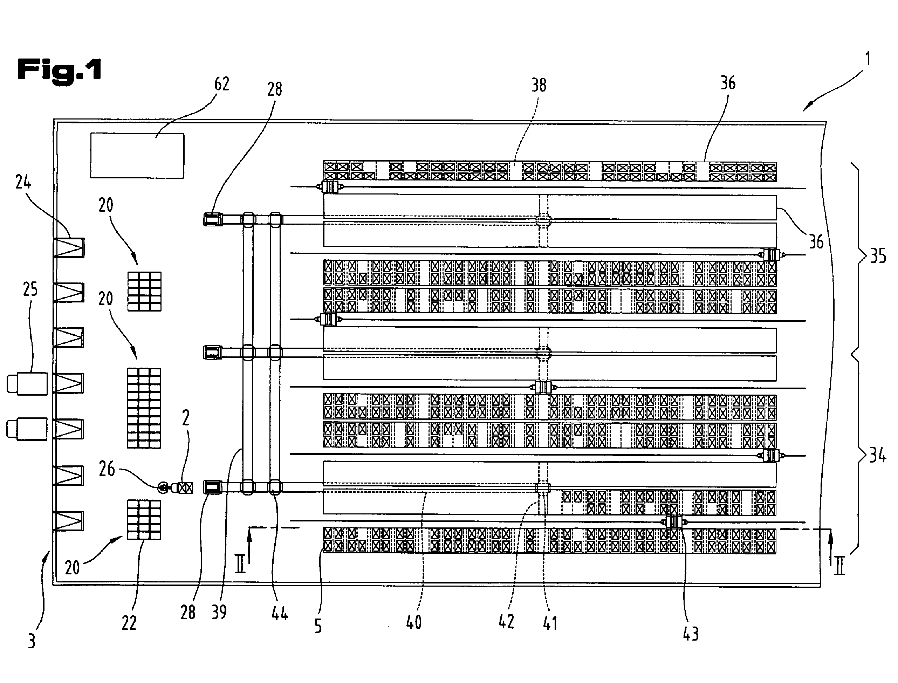

In den gemeinsam beschriebenen Fig. 1 bis 10 ist ein erfindungsgemäßes, automatisiertes Lagersystem 1 zum Lagern, Fördern und/oder Kommissionieren von Packeinheiten 2, 2' (Collis), insbesondere ohne Ladehilfsmittel, wie Tablar, Behälter und dgl., gezeigt. Das Lagersystem 1 umfasst einen Wareneingang 3, ein Eingangslager 4 zur temporären Lagerung von Vorratseinheiten 5, Depalettiereinrichtungen 6, 7, automatisierte Fördertechniken 68, 96, 107, 126, 147, Bereitstellungsplätze 69, 120 für die Packeinheitenreihe(n), Transportlagen-Verdichtungsplätze 98, 122, Transportlagen-Bereitstellungsplätze 111, 128, zumindest einen Zwischenpuffer 112, einen oder mehrere Auftragspuffer 129 zur temporären Lagerung von Packeinheiten 2, 2' zu zumindest einem elektronisch erfassten Auftrag, Beladestationen 145 zum Beladen von Ausliefergebinden 148, einen Konsolidierungsbereich 18 sowie einen Warenausgang 19. Die Anzahl der Depalettiereinrichtungen 6, 7 und Fördertechniken 68, 96, 107, 126, 147 ist frei wählbar. Zwischen dem Wareneingang 3 und dem Eingangslager 4 sind Eingangspufferzonen 20 und im Konsolidierungsbereich 18 Ausgangspufferzonen 21 vorgesehen. Die Eingangs- und Ausgangspufferzonen 20, 21 weisen jeweils in Reihe hintereinander angeordnete Stellplätze 22, 23 auf, die in einer Ausführung beispielsweise am Boden des Lagergebäudes ausgebildet und durch Markierungen gekennzeichnet sind.

Am Wareneingang 3 sind mehrere Anlieferungsstationen 24 vorgesehen, an denen Lieferanten-Transportfahrzeuge 25, insbesondere Lastwagen, andocken, und von einem Lagerarbeiter 26 die Vorratseinheiten 5 auf ein Verteilfahrzeug 27 übernommen und entweder in einer Eingangspufferzone 20 auf wenigstens einen Stellplatz 22 zwischengelagert oder zu einer, das Vorratseinheiten-Verteilsystem auf einer den Eingangspufferzonen 20 zugewandten Seite aufweisenden Aufgabestation 28 transportiert werden.

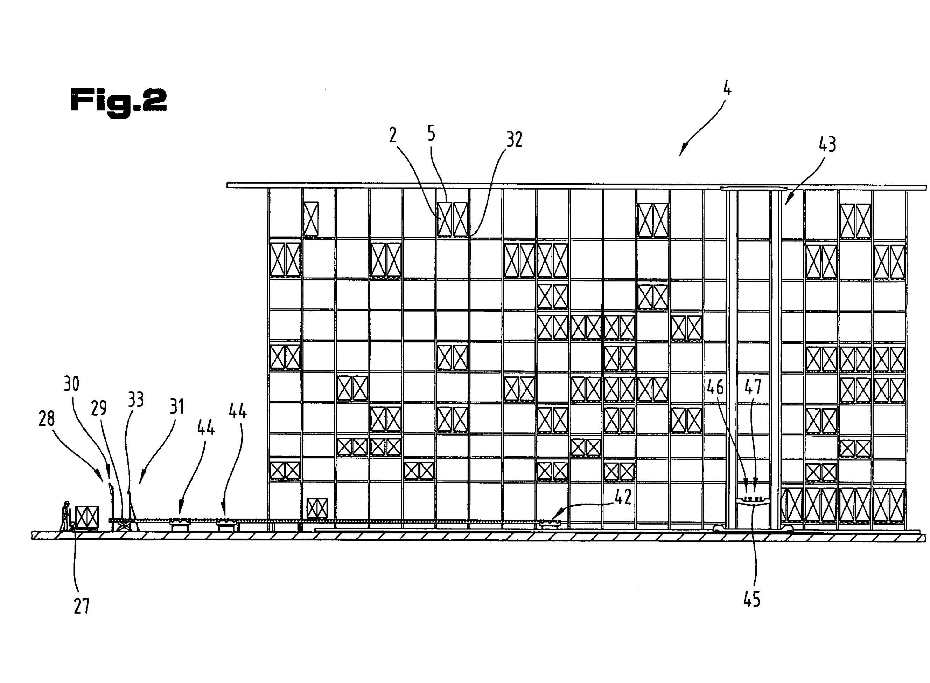

Wie in der Fig. 2 besser ersichtlich, weist jede Aufgabestation 28 einen zwischen einer abgesenkten Übernahmestellung und einer angehobenen Förderstellung verstellbaren Hubtisch auf, der mit einer Förderbahn 29 ausgestattet ist. Die Förderbahn 29 ist beispielsweise durch, mit Abstand parallel verlaufenden Rollen gebildet. Genauso gut kann die Förderbahn 29 auch durch einen Bandförderer und dgl. gebildet sein.

Die Aufgabestationen 28 sind jeweils mit einer Ein- und/oder Ausgabevorrichtung 30 ausgestattet, die durch eine optische und/oder akustische Anzeige, beispielsweise einen Bildschirm, gebildet ist, mittels welcher vom Rechner, insbesondere Lagerverwaltungsrechner, einem Lagerarbeiter 26 angewiesen wird, welche Vorratseinheit 5 auf welcher Aufgabestation 28 aufgegeben werden muss. Dadurch wird nicht nur der Warenfluss koordiniert, sondern auch die Zuteilung von Vorratseinheiten 5 auf eine für diese nicht bestimmte Aufgabestation 28 vermieden.

Das Vorratseinheiten-Verteilsystem umfasst an jeder Aufgabestation 28 eine Prüfstation 31, mittels welcher die Qualität eines Anliefergebindes 32, der Beladungszustand auf dem Anliefergebinde 32 und/oder eine Eingangskontrolle der Packeinheiten 2, 2' noch vor der Einlagerung der Vorratseinheit 5 in das Eingangslager 4 durchgeführt wird.

Des Weiteren werden am Wareneingang 3, vorzugsweise an der Prüfstation 31 die Packeinheiten 2, 2' über eine Packeinheiten-Identifikationseinrichtung, beispielsweise ein Lesegerät 33 oder Bildverarbeitungssystem identifiziert. Beispielsweise werden Daten aus einem von Seiten des Herstellers/Lieferanten der Packeinheiten 2 auf das Anliefergebinde 32, beispielsweise EURO-Palette, Chep-Palette, Düsseldorfer-Palette und dgl., aufgebrachten Datenträger ausgelesen, insbesondere ein Barcode gescannt. Der Datenträger kann aber auch durch einen Transponder, Magnetstreifen oder eine RFID-Etikette (Radio Frequency Identification Device) und dgl. gebildet sein.

Danach werden die elektronisch identifizierten Packeinheiten 2, 2' mit dem Anliefergebinde 32 als Vorratseinheit 5 von der Hubstation abtransportiert und in das Eingangslager 4 eingelagert. Auf dem Anliefergebinde 32 sind die Packeinheiten 2, 2' bevorzugt sortenrein gestapelt.

Können die Daten nur unzureichend ausgelesen werden, weil der Datenträger beispielsweise in Folge des Transportes der Vorratseinheiten 5 zum Lagersystem 1 teilweise beschädigt wurde, wird dem Lagerarbeiter 26 eine Fehlermeldung an der Ausgabevorrichtung 30 angezeigt. Der Lagerarbeiter 26 hat nun dafür zu sorgen, dass er an der Eingabevorrichtung 30 beispielsweise aus einer Packeinheiten-Bestandsliste, die das gesamte Sortiment von Packeinheiten 2, 2' repräsentiert, die Packeinheit 2, 2' identifiziert, welche die Vorratseinheit 5 enthält. Durch Auswahl der entsprechenden Packeinheit 2, 2' aus der Bestandsliste wird ein neuer Datenträger hergestellt, beispielsweise eine neue Barcodeetikette an einem Drucker ausgedruckt. Der Datenträger wird am Anliefergebinde 32 befestigt. Erst danach wird die Vorratseinheit 5 vom Hubtisch abtransportiert und in das Eingangslager 4 eingelagert.

Es werden zu jeder Packeinheit 2, 2' von einem Rechner die Artikeleigenschaften bzw. Packeinheiten-Eigenschaften, wie die Abmessungen, das Gewicht, die Dichte, der Kippfaktor (Verhältnis zwischen einer Seitenlänge und Höhe der Packeinheit), Stabilität, der Verpackungstyp, beispielsweise Karton, Kunststoff, Tragfähigkeit und/oder Form der Packeinheit 2, 2' und dgl., elektronisch erfasst und als Stammdaten in einer Datenbank eines elektronischen Verwaltungssystems hinterlegt, welche über den Datenträger, insbesondere einen Identifikationscode abrufbar sind. Soll eine Vorratseinheit 5 in das Eingangslager 4 eingelagert werden, werden mittels der mit einem Rechner verbundenen Packeinheiten-Identifikationseinrichtung die Daten, insbesondere der Identifizierungscode, erfasst. Die Packeinheiten 2, 2' unterschiedlichsten Formates und Sortimentes werden vom Rechner anhand ihrer in der Datenbank hinterlegten Packeinheiten-Eigenschaften in zumindest eine erste (kleine) Abmessungsklasse und zweite (große) Abmessungsklasse unterteilt. Die Packeinheiten 2 der ersten Abmessungsklasse weisen eine Länge zwischen ca. 100 mm und ca. 500 mm und Breite zwischen ca. 100 mm und ca. 350 mm auf. Die Packeinheiten 2' der zweiten Abmessungsklasse weisen eine Länge zwischen ca. 500 mm und ca. 800 mm und Breite zwischen ca. 300 mm und ca. 600 mm auf. Die Packeinheiten 2, 2' werden an der Packeinheiten-Identifikationseinrichtung am Wareneingang 3 über den Datenträger, der beispielsweise in Form eines Identifizierungscodes auf der Vorratseinheit 5 angeordnet ist, eindeutig identifiziert und den Abmessungsklassen zugeordnet, indem anhand der Daten (des Identifikationscodes) auf die, diesem zugeordneten und aus der Datenbank abrufbaren Packeinheiten-Eigenschaften zurückgegriffen wird.

Das als Hochregallager ausgebildete Eingangslager 4 ist in Lagerbereiche 34, 35 aufgeteilt und umfasst parallel nebeneinander angeordnete Lagerregale 36, wobei zwischen den mit Abstand einander gegenüberliegenden Lagerregalen 36 eine Gasse 37 ausgebildet ist. Die Lagerregale 36 weisen in einem Rasterabstand vertikal übereinander liegende Lagerebenen auf. In jeder Lagerebene sind mehrere "virtuelle" Lagerkanäle 38 angeordnet, wobei der Lagerkanal 38 in seiner Längserstreckung zumindest einen oder mehrere Stellplätze aufweist und in einem Lagerkanal 38 zumindest zwei mittig zueinander ausgerichtete Vorratseinheiten 5 in einer Reihe hintereinander abgelegt werden können.

Das automatisierte Vorratseinheiten-Verteilsystem des Eingangslagers 4 umfasst in der Anliefer- und Versandebene (erste Ebene - Fig. 1, 2) in mehreren Förderabschnitten eine geschlossene Förderumlaufbahn 39, die Aufgabestationen 28, die mit einem Ende an die Aufgabestationen 28 anschließenden Einlagerbahnen 40, die an einem von den Aufgabestationen 28 abgewandten Ende anschließenden Verteilerbahnen 41 und zu beiden Seiten der Verteilerbahnen 41 angeordneten Bereitstellungsbahnen 42 sowie rechnergesteuerte Förderfahrzeuge 43. Die Einlagerbahnen 40 sind jeweils vorzugsweise durch einen Stauförderer gebildet und weisen in Förderrichtung hintereinander angeordnete Stauplätze auf. Die Förderumlaufbahn 39 ist beispielsweise durch einen Kettenförderer gebildet und weist in den Kreuzungsbereichen Vorratseinheiten-Umsetzfördervorrichtungen 44 auf. Jedes Förderfahrzeug 43, insbesondere Regalbediengerät, ist in der Gasse 37 entlang eines Schienensystems an der Regalfront verfahrbar und mit einer heb- und senkbaren Plattform 45 ausgestattet. Auf der Plattform 45 ist eine Lastaufnahmevorrichtung angeordnet, die wenigstens eine Fördervorrichtung 46 und eine relativ zur Plattform nach beiden Richtungen ausfahrbare Ein- und Auslagerungsvorrichtung 47, insbesondere Teleskopgabeln, aufweisen, mittels welcher die Vorratseinheiten 5 in einen Lagerkanal 38 des links oder rechts von der Gasse 37 aufgestellten Lagerregals 36 ein- bzw. ausgelagert werden können.

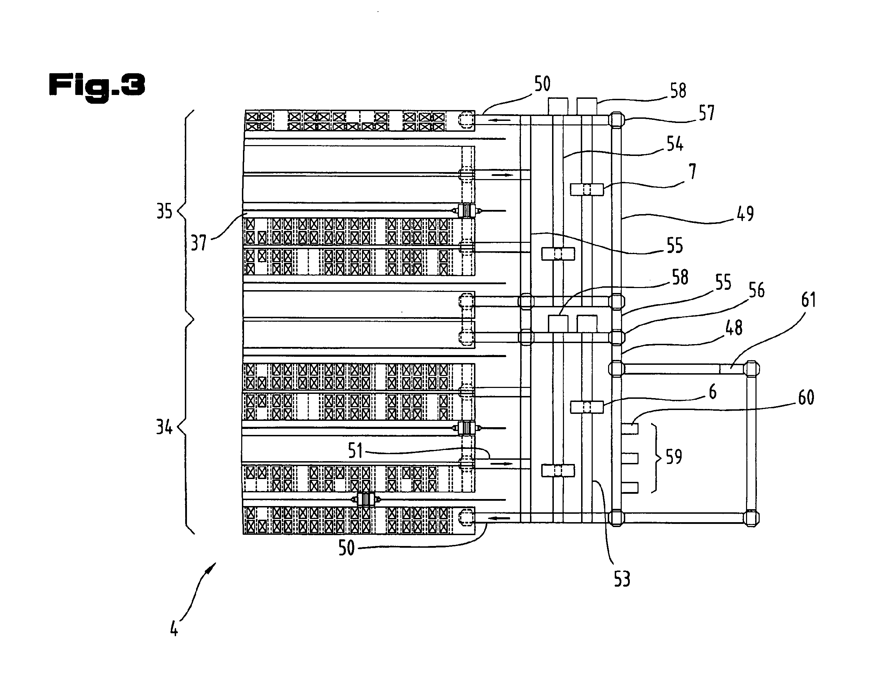

In der Umlagerebene (zweite Ebene - Fig. 3) umfasst das Vorratseinheiten-Verteilsystem in mehreren Förderabschnitten an einer der Stirnseiten des Eingangslagers 4 und jeweils einem Lagerbereich 34, 35 zugeordnete, geschlossene Förderumlaufbahnen 48, 49 und jeweils an diese anschließende Ein- und/oder Auslagerbahnen 50, 51 und jeweils an die Förderumlaufbahn 48, 49 anschließende Förderbahnen 53, 54. Die beispielsweise durch einen Kettenförderer gebildeten Förderumlaufbahnen 48, 49 können zusätzlich durch eine Verbindungsbahn 55 miteinander verbunden sein und weisen in den Kreuzungsbereichen Vorratseinheiten-Umsetzfördervorrichtungen 56, 57 auf.

Die Vorratseinheiten 5 werden von den Förderfahrzeugen 43 aus den Lagerkanälen 38 ausgelagert und zu den Ein- und/oder Auslagerbahnen 50, 51 gefördert. Dort angekommen, werden die Vorratseinheiten 5 durch die Auslagerbahnen 51, Teilabschnitte der Förderumlaufbahnen 48,49 und den Förderbahnen 53, 54 zu den Depalettiereinrichtungen 6, 7 angefördert. An jeder Depalettiereinrichtung 6, 7 werden die Vorratseinheiten 5 durch einen Hubtisch - wie in strichlierte Linien eingetragen - in eine dritte Ebene angehoben, in der die Depalettierung der Packeinheiten 2, 2', insbesondere der jeweils obersten Stapellage erfolgt.

Nach dem Depalettiervorgang werden die an jeder Depalettiereinrichtung 6, 7 zum Teil depalettierten Vorratseinheiten 5 oder die leeren Anliefergebinde 32 durch den Hubtisch auf die Umlagerebene abgesenkt und auf den Förderbahnen 53, 54 abgefördert. Die zum Teil depalettierten Vorratseinheiten 5 (Anbruchpaletten) werden zu den Förderfahrzeugen 43 gefördert und von diesen wiederum in das Eingangslager 4 eingelagert. Die leeren Anliefergebinde 32 werden zu einer Stapelvorrichtung 58 gefördert und von dieser übereinander gestapelt. Die Stapel werden, wenn sie eine bestimmte Höhe erreicht haben, zu einer Sortiereinrichtung 59 gefördert, wo die unterschiedlichen Typen von Anliefergebinden 32 sortenrein sortiert und an Sammelstationen 60 sortenrein gestapelt werden. Die sortenreinen Stapel werden sodann zu einer Hebevorrichtung 61 gefördert und von der Umlagerebene auf die Anliefer- und Versandebene abgesenkt und bei Bedarf zur neuerlichen Verwendung an einem Pufferplatz 62 (Fig. 1) bereitgestellt.

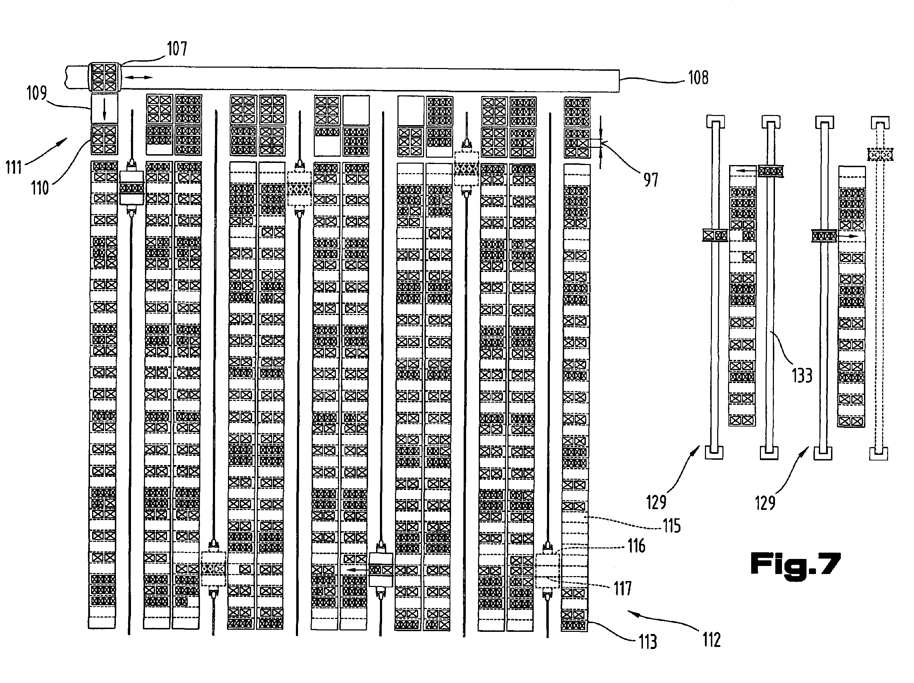

Wie oben beschrieben, werden die Vorratseinheiten 5 durch einen Hubtisch von der Umlagerebene in eine dritte Ebene angehoben und von der Depalettiereinrichtung 6, 7 vorzugsweise eine Stapellage nach der anderen gemäß einem Kommissionierauftrag oder Nachschubauftrag depalettiert. Ein Nachschubauftrag wird vom Rechner erfasst, wenn im Zwischenpuffer 112 (Fig. 7) ein Mindestbestand (minimaler Lagerbestand) an Packeinheiten 2, 2' eines bestimmten Typs erreicht wird. Der Zwischenpuffer 112 bildet einen Packeinheitenpuffer aus. Der Lagerbestand definiert die Menge zu jedem der im Zwischenpuffer 112 eingelagerten, unterschiedlichen Artikeln (Packeinheiten 2, 2'). Ein Kommissionierauftrag wird insbesondere durch eine Kundenbestellung ausgelöst und vom Rechner erfasst.

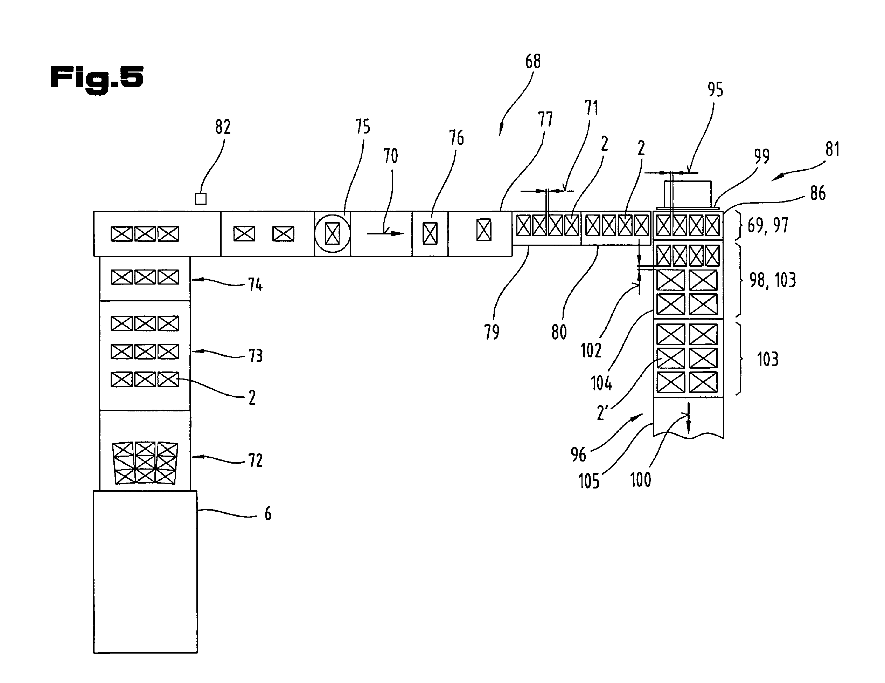

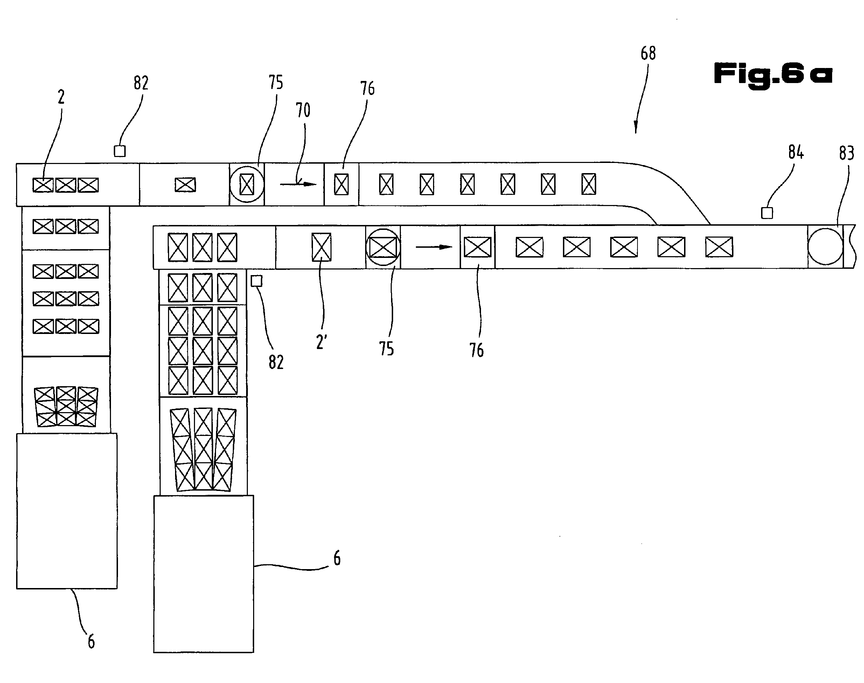

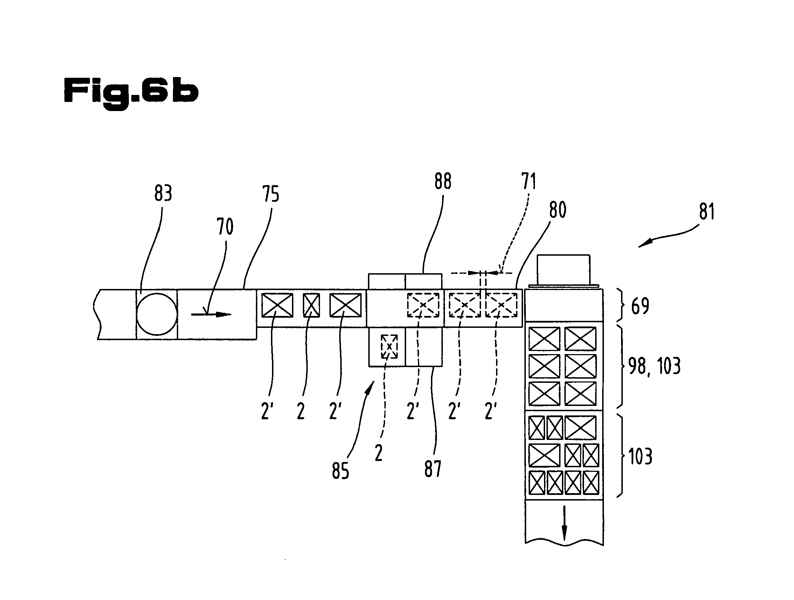

Die depalettierten (sortenreinen) Stapellagen werden von den Depalettiereinrichtungen 6, 7 auf einer Fördertechnik 68 zu Bereitstellungsplätzen 69 gefördert, wie in den Fig. 5, 6a und 6b ersichtlich. Die Fördertechnik 68 ist in Förderrichtung 70 in mehrere Förderabschnitte unterteilt, in welchen unterschiedliche Funktionen ausgeführt werden.

Die Fördertechnik 68, wie sie in Fig. 5 näher dargestellt ist, umfasst in einem ersten Förderabschnitt eine nicht näher dargestellte Vorrichtung 72 zum Auflösen der Stapellage an Packeinheiten 2 in parallele Reihen und in einem zweiten Förderabschnitt eine nicht näher dargestellte Vorrichtung 73 zur Abstandsbildung zwischen in Förderrichtung 70 aufeinander folgenden Reihen von Packeinheiten 2 und in einem dritten Förderabschnitt eine nicht näher dargestellte Ausschleusvorrichtung 74, beispielsweise eine Schiebeeinrichtung, mit letzterer die Packeinheiten 2 auf einen vierte Förderabschnitt gefördert werden. Die nun auf den vierten Förderabschnitt übergebenen Packeinheiten 2 werden vereinzelt auf den fünften Förderabschnitt gefördert. Im fünften Förderabschnitt sind in Förderrichtung 70 hintereinander eine Drehvorrichtung 75, eine Kippvorrichtung 76 und Ausrichtvorrichtung 77 angeordnet. Die Drehvorrichtung 75 und Kippvorrichtung 76 bilden eine Manipulationsvorrichtung. Der sechste und siebente Förderabschnitt der Fördertechnik 68 bilden Pufferfördervorrichtungen 79, 80 aus, auf denen die Packeinheiten 2 verweilen, ehe sie auf den Bereitstellungsplatz 69 gefördert werden. Die Förderabschnitte weisen jeweils zumindest eine automatisierte Fördervorrichtung auf, die durch einen Rollenförderer, Bandförderer und dgl. gebildet ist.

Durch unterschiedliche Fördergeschwindigkeiten, mit denen die Packeinheiten 2 in den Förderabschnitten gefördert werden, werden die Packeinheiten 2 bei ihrer Übergabe zwischen den Förderabschnitten vereinzelt, dh. mit einer definierten Lückenweite 71 zwischen aufeinander folgenden Packeinheiten 2 zum Bereitstellungsplatz 69 gefördert. Die Fördertechnik 68 weist demnach eine Vereinzelungsvorrichtung auf.

Der Drehvorgang wird benötigt, da üblicherweise die Packeinheiten 2 auf dem Anliefergebinde 32 (Fig. 2) aus Gründen der Stabilisierung des Ladestapels unterschiedlich orientiert gestapelt sind. Werden die Packeinheiten 2 nun vom Anliefergebinde 32 depalettiert, können diese relativ zur Förderrichtung 70 längs oder quer auf die Fördertechnik 68 übergeben werden. Mittels der Drehvorrichtung 75 kann nun sichergestellt werden, dass die Packeinheiten 2, 2' gleicher oder unterschiedlicher Abmessungsklassen in eine für ihre Übergabe auf einen der Bereitstellungsplätze 69 und Zusammenstellung einer noch näher zu beschreibenden Transportlage erforderliche Transportposition (Ausrichtung) gedreht werden.

Wie in Fig. 5 ersichtlich, sollen die vom Anliefergebinde 32 (sortenrein) depalettierten Packeinheiten 2 der ersten (kleinen) Abmessungsklasse vor ihrer Übergabe auf den Bereitstellungsplatz 69 relativ zur Förderrichtung 70 quer orientiert zu einer Verdichtungsvorrichtung 81 angeliefert werden. Der Bereitstellungsplatz 69 weist eine Förderfläche auf, auf welcher die Packeinheiten 2 aufliegend gefördert werden. Die Förderfläche ist durch eine Fördervorrichtung 86 gebildet.

Wurden Packeinheiten 2 der ersten Abmessungsklasse depalettiert, wird von jeder Packeinheit 2 über ein entlang der Fördertechnik 68, insbesondere im vierten Förderabschnitt angeordnetes und mit einem Rechner verbundenes Erfassungsmittel 82, beispielsweise eine Sensorik, ein Lesegerät (Scanner) oder Bildverarbeitungssystem, eine Istlage (Orientierungslage) ermittelt und vom Rechner die Istlage mit einer Solllage verglichen. Wird eine Packeinheit 2 auf dem vierten Förderabschnitt relativ zur Förderrichtung 70 längs orientiert (Istlage) gefördert, während sie auf dem Bereitstellungsplatz 69 relativ zur Förderrichtung 70 quer orientiert (Solllage) benötigt wird, wird sie von der Drehvorrichtung 75 um 90° nachgedreht und in dieser Orientierungslage (Solllage) zur Pufferfördervorrichtung 79, 80 gefördert. Ein Antrieb der Drehvorrichtung 75 erhält hierzu von einem Rechner ein Steuersignal, welches ausgelöst wird, wenn die Istlage von der Solllage abweicht. Der Antrieb ist beispielsweise mit einem Drehteller gekuppelt, welcher angesteuert wird, wenn die Packeinheit 2 in der von der Solllage abweichenden Istlage vom vierten Förderabschnitt abgefördert wird. Entspricht die Istlage der Solllage wird die Packeinheit 2 ohne Drehvorgang zur Pufferfördervorrichtung 79, 80 gefördert.

Werden von der Depalettiereinrichtungen 6 hingegen Packeinheiten 2' der zweiten (großen) Abmessungsklasse depalettiert, sollen diese vor ihrer Übergabe auf den Bereitstellungsplatz 69 relativ zur Förderrichtung 70 längs orientiert (Solllage) zu einer Verdichtungsvorrichtung 81 angeliefert werden. Wenn erforderlich, werden diese auf der Drehvorrichtung 75 in die Solllage nachgedreht.

Wird eine Packeinheit 2, 2' mit kritischer Schwerpunktlage (Verhältnis zwischen kleinster Seitenlänge und Höhe) transportiert und neigt diese zum Kippen, kann diese an der Kippvorrichtung 76 umgelegt werden.

Die Packeinheiten 2, 2' werden vor ihrer Übergabe auf den Bereitstellungsplatz 69 über eine nicht näher dargestellte Ausrichtvorrichtung 77 in eine der Übergabelage entsprechende Solllage verbracht. Beispielsweise weist der fünfte Förderabschnitt an seinem der Pufferfördervorrichtung 79 benachbarten Ende einen die Ausrichtvorrichtung 75 bildenden Rollenförderer mit relativ zur Förderrichtung 70 nicht gezeigten, schräg gestellten Förderrollen auf, sodass die Packeinheiten 2, 2' mit einer ihrer Kanten gegen eine nicht dargestellte Leitblanke verbracht werden.

Wie in den Fig. 6a und 6b dargestellt, kann eine Verdichtungsvorrichtung 81 von zwei oder mehreren Depalettiereinrichtungen 6 mit Packeinheiten 2, 2' versorgt werden.

Die depalettierten (sortenreinen) Stapellagen werden von den beiden Depalettiereinrichtungen 6 mittels der Fördertechnik 68 zu einem Bereitstellungsplatz 69 gefördert. Die Fördertechnik 68 weist parallele Förderbahnen auf, wovon jede mit den oben beschriebenen ersten bis fünften Förderabschnitten ausgebildet ist. Die Förderbahnen verlaufen in einem Zusammenführungsabschnitt zu einer gemeinsamen Förderbahn ineinander. Nach dem Zusammenführungsabschnitt, in einem sechsten Förderabschnitt sind eine Drehvorrichtung 83 und die oben beschriebene Ausrichtvorrichtung 75 angeordnet. Werden die Packeinheiten 2, 2' vom Zusammenführungsabschnitt abgefördert, wird über ein entlang der Fördertechnik 68, insbesondere im sechsten Förderabschnitt angeordnetes und mit einem Rechner verbundenes Erfassungsmittel 84, beispielsweise eine Sensorik, ein Lesegerät (Scanner) oder Bildverarbeitungssystem eine Istlage ermittelt. Im Normalfall sollten die Packeinheiten 2, 2' im Zusammenführungsabschnitt aber bereits in ihrer Solllage gefördert werden. Sollte, bedingt durch Störeinflüsse, dennoch eine Packeinheit 2, 2' das Erfassungsmittel 84 in einer von der Solllage abweichenden Istlage passieren, wird diese von der Drehvorrichtung 83 in die Solllage verbracht und in dieser Orientierungslage in den siebenten Förderabschnitt gefördert. Ein Antrieb der Drehvorrichtung 75 erhält hierzu von einem Rechner ein Steuersignal, welches ausgelöst wird, wenn die Istlage von der Solllage abweicht.

In einem achten Förderabschnitt, ist die Fördertechnik 68 an eine rechnergesteuerte Sortiervorrichtung 85 angeschlossen, die einen Pufferbahnhof 87 mit einem oder mehreren Pufferplätzen und auf der gegenüber liegenden Seite eine Ausschleusvorrichtung 88 aufweist. Die Ausschleusvorrichtung 88 weist beispielsweise je Pufferplatz eine Schiebevorrichtung auf. Der Pufferbahnhof 87 weist je Pufferplatz eine nicht dargestellte Einschleusvorrichtung auf, die beispielsweise durch einen Band- oder Riemenförderer und dgl. gebildet ist. Ein- und Ausschleusvorrichtung können auch eine Einheit bilden.

Von der Sortiervorrichtung 85 können die in der Solllage angeförderten Packeinheiten 2, 2' nach, von einem Rechner vorgegebenen Sortierkriterien in der Reihenfolge sortiert werden. Die Sortierkriterien sind durch die Abmessungsklassen der Packeinheiten 2, 2' und/oder ein zweidimensionales Beladungsmuster der Packeinheiten 2, 2' für eine noch näher zu beschreibende Transportlage definiert.

Wie oben beschrieben, wird zwischen zwei Abmessungsklassen unterschieden, welche vom Rechner den Packeinheiten 2, 2' aus den erfassten Abmessungen zugeteilt werden. Natürlich kann das breite Sortiment an Artikeln/Packeinheiten 2, 2' auch in mehr als zwei Abmessungsklassen unterteilt werden. Üblicherweise werden in dem erfindungsgemäßen Lagersystem 1 mehrere hunderte bis tausende unterschiedliche Artikel (Packeinheiten), beispielsweise aus der Lebensmittelindustrie verteilt, zwischengelagert und kommissioniert.

Wie in Fig. 6a gezeigt, sind an der Fördertechnik 68 zwei Depalettiereinrichtungen 6 angeschlossen, die parallel, unterschiedliche Packeinheiten 2, 2' depalettieren. Dadurch kann die Durchsatzleistung auf der Fördertechnik 68 erhöht werden, jedoch tritt eine mehr oder weniger starke Vermischung unterschiedlicher Packeinheiten 2, 2' auf der Fördertechnik 68 auf.

Jedoch kann durch eine Sortierung entweder eine gesamte Transportlage mit Packeinheiten 2 einer einzigen Abmessungsklasse oder eine noch näher zu beschreibende Reihe mit Packeinheiten 2 einer einzigen Abmessungsklasse zusammengestellt werden, falls dies gewünscht ist.

Gemäß diesem Ausführungsbeispiel (Abmessungsklassen als Sortierkriterium) werden auf der Fördertechnik 68 in Förderrichtung 70 Packeinheiten 2, 2' unterschiedlicher Abmessungsklassen aufeinander folgend gefördert. Zwischen den Packeinheiten 2' der zweiten Abmessungsklasse befindet sich eine Packeinheit 2 der ersten Abmessungsklasse. Diese Reihenfolge wird vom Rechner oder ein nicht dargestelltes Erfassungsmittel erfasst. Die Packeinheiten 2, 2' werden durch die Sortiervorrichtung 85 gefördert. Ist die Packeinheit 2 der ersten Abmessungsklasse in der Sortiervorrichtung 85 angekommen, wird diese mittels der, von einem Rechner angesteuerten Ausschleusvorrichtung 88 auf einen freien Pufferplatz im Pufferbahnhof 87 ausgeschleust, wie in strichlierte Linien eingetragen. Die in Förderrichtung 70 vordere und hintere Packeinheit 2' können während des Ausschleusvorganges in Richtung zum Bereitstellungsplatz 69 weitergefördert werden, wie in strichlierte Linien eingetragen. Die zwischen den Packeinheiten 2' gebildete Lücke wird noch vor deren Übergabe auf den Bereitstellungsplatz 69 auf die Lückenweite 71 geschlossen. In einem neunten Förderabschnitt der Fördertechnik 68 ist die Pufferfördervorrichtung 80 angeordnet, die beispielsweise durch einen Stauförderer gebildet und in Förderrichtung 70 hintereinander angeordnete Stauplätze aufweist.

Werden nachfolgend Packeinheiten 2 der ersten Abmessungsklasse angefördert, kann die ausgeschleuste, "geparkte" Packeinheit 2 über die von einem Rechner angesteuerte Einschleusvorrichtung vom Pufferbahnhof 87 wieder auf die Fördertechnik 68 in eine ausreichend breite Lücke zwischen an der Sortiervorrichtung 85 vorbeitransportierten Packeinheiten 2 oder an einem Ende einer an der Sortiervorrichtung 85 vorbeitransportierten Packeinheitengruppe eingeschleust werden.

Die Sortierung der Packeinheiten 2, 2' kann aber auch auf einem zweidimensionalen Beladungsmuster für eine Transportlage basieren.

Gemäß diesem Ausführungsbeispiel (Beladungsmuster als Sortierkriterium) wird vom Rechner ein optimiertes Beladungsmuster der Packeinheiten 2, 2' für eine Transportlage bestimmt und aus dieser eine vorteilhafte Beladereihenfolge ermittelt. Die Beladereihenfolge ergibt sich aus der, von einem am Rechner laufenden Computerprogramm bezüglich Förderleistung eines noch näher zu beschreibenden Transportlagen-Verteilsystems, Transportsicherheit der Transportlage, Flächennutzung auf einer Förderfläche des Transportlagen-Verteilsystem und dgl. berechneten, optimierten Beladungsmusters. Die Packeinheiten 2, 2' sind über einen Datenträger eindeutig identifizierbar und kann über die, in einer Datenbank gespeicherten Abmessungen das Beladungsmuster der Transportlage ermittelt werden. Entsprechend dem Beladungsmuster wird die Sortiervorrichtung 85, insbesondere die Ausschleusvorrichtung 84 und die Einschleusvorrichtung vom Rechner gesteuert und werden die Packeinheiten 2, 2' bei Bedarf in die vorteilhafte Beladereihenfolge sortiert.

Wie in den Fig. 5 und 6 ersichtlich, werden die gegebenenfalls sortierten Packeinheiten 2, 2' nacheinander mit relativ zur Förderrichtung 70 gegenseitigem Abstand 95 auf den Bereitstellungsplatz 69 gefördert und beispielsweise aus vier Packeinheiten 2 der ersten (kleinen) Abmessungsklasse oder aus zwei Packeinheiten 2' der zweiten (großen) Abmessungsklasse oder aus zwei Packeinheiten 2 der ersten (kleinen) Abmessungsklasse und einer Packeinheit 2' der zweiten (großen) Abmessungsklasse zu einer Reihe 97 gebildet.

Die Verdichtungsvorrichtung 81 weist einen Transportlagen-Verdichtungsplatz 98 und eine Ausschleusvorrichtung 99, beispielsweise eine Verschiebevorrichtung auf, mittels welcher die auf dem Bereitstellungsplatz 69 zu einer Reihe 97 gebildeten Packeinheiten 2 (gemäß Fig. 5 vier Packeinheiten 2 der ersten Abmessungsklasse) in Förderrichtung 100 auf den Transportlagen-Verdichtungsplatz 98 gefördert wird. Die Reihen 97 werden so nacheinander mit relativ zur Förderrichtung 100 gegenseitigem Abstand 102 auf den Transportlagen-Verdichtungsplatz 98 gefördert und dabei eine Transportlage 103 zusammengestellt. Der Transportlagen-Verdichtungsplatz 98 weist eine Förderfläche auf, auf welcher die Packeinheiten 2 aufliegend gefördert werden. Die Förderfläche ist vorzugsweise durch eine Fördervorrichtung 104 einer Fördertechnik 96 gebildet. Gegebenenfalls kann der Transportlagen-Verdichtungsplatz 98 auch von einem Verteilwagen 107 ausgebildet sein. Ein Transportlagen-Verteilsystem weist den Verteilwagen 107 auf. Die Transportlage 103 wird in diesem Fall von der Verdichtungsvorrichtung 81 auf den die Förderfläche ausbildenden, automatisierten Verteilwagen 107 übernommen. Dadurch kann Fördertechnik eingespart werden.

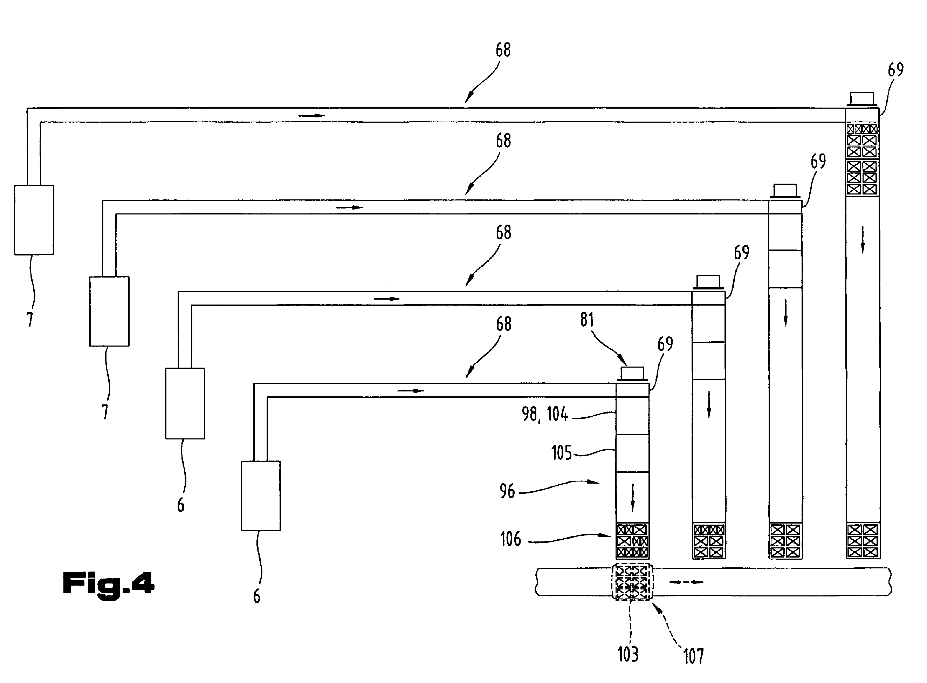

Die Fördertechnik 96 weist neben der Fördervorrichtung 104 eine Fördervorrichtung 105 auf, mittels welcher die Transportlage 103 vom Transportlagen-Verdichtungsplatz 98 zu einem Umlagerplatz 106 (Fig. 4) gefördert wird. Der Umlagerplatz 106 weist eine Fördervorrichtung auf. Dort angekommen, wird die Transportlage 103 an einen rechnergesteuerten Verteilwagen 107 (Fig. 4 und 7) auf eine Förderfläche übergeben. Vorzugsweise wird die Förderfläche von einer auf einer Plattform angeordneten Fördervorrichtung, insbesondere einem Bandförderer, ausgebildet und werden zur Übergabe der Transportlage 103, der Verteilwagen 107 vor dem Umlagerplatz 106 positioniert, die Fördervorrichtungen am Umlagerplatz 106 und am Verteilwagen 107 synchron angetrieben und dabei die Transportlage 103 auf den Verteilwagen 107 verlagert.

Der Verteilwagen 107 verbindet die Umlagerplätze 106 und von diesen entfernt angeordnete Transportlagen-Bereitstellungsplätze 111, die in einer Vorzone eines Zwischenpuffers 112 vorgesehen sind. Der Verteilwagen 107 ist entlang eines Schienensystems 108 verfahrbar und fördert die Transportlage 103 von einem Umlagerplatz 106 (wie in strichlierte Linien in Fig. 4 eingetragen) zu einem der Transportlagen-Bereitstellungsplätze 111 (wie in vollen Linien in Fig. 7 eingetragen).

Die Transportlagen-Bereitstellungsplätze 111 weisen jeweils eine Förderfläche auf, auf welcher die Transportlage 103 aufliegend gefördert wird. Die Förderfläche wird von zumindest einer Fördervorrichtung ausgebildet. Gemäß diesem Ausführungsbeispiel weist die Fördervorrichtung relativ zur Förderrichtung zwei hintereinander angeordnete Stauplätze 109, 110 auf.

Der Zwischenpuffer 112 weist beispielsweise mit Abstand einander gegenüberliegende Lagerregale 113 und jeweils in einer Gasse zwischen benachbarten Lagerregalen 113 angeordnete, rechnergesteuerte Fördertechniken 114 auf. Die Transportlagen-Bereitstellungsplätze 111 sind in Verlängerung zu den Lagerregalen 113 in der Vorzone angeordnet. Die Lagerregale 113 sind in einer bevorzugten Ausführung durch Fachbodenregale gebildet und werden die Packeinheiten 2, 2' ohne zusätzliches Ladehilfsmittel, wie Tablar, Palette und dgl., direkt auf den Fachboden abgelegt. Die Lagerregale 113 weisen in einem Rastabstand vertikal übereinander liegende Lagerebenen auf, wobei in jeder Lagerebene mehrere "virtuelle" Lagerkanäle 115 nebeneinander angeordnet sind. Jeder Lagerkanal 115 bildet eine Lagerstelle aus und weist in seiner Längserstreckung zumindest eine Lagerposition für zwei Packeinheiten 2 der ersten (kleinen) Abmessungsklasse oder eine Packeinheit 2' der zweiten (großen) Abmessungsklasse 2' auf Bevorzugt sind zwei Lagerpositionen vorgesehen und können an einer Lagerstelle entweder vier Packeinheiten 2 der ersten Abmessungsklasse oder zwei Packeinheiten 2' der zweiten Abmessungsklasse oder eine Mischung daraus in einer Reihe hintereinander abgelegt werden.

Die Fördertechnik 114 ist durch ein Förderfahrzeug, insbesondere rechnergesteuertes Regalbediengerät, gebildet, welches in der Gasse entlang eines Schienensystems an der Regalfront verfahrbar und mit einer heb- und senkbaren Plattform 116 ausgestattet ist.

Auf der Plattform 116 ist eine nicht näher dargestellte Lastaufnahmevorrichtung 117 angeordnet, die eine relativ zur Plattform 116 nach beiden Richtungen ausfahrbare Ein- und Auslagervorrichtung, insbesondere Teleskoparme mit verstellbaren, beispielsweise verschwenkbaren, Mitnahmeorganen, wie sie beispielsweise aus der US 6,923,612 B2 bekannt ist, aufweist, mittels welcher einerseits Packeinheiten 2, 2' in einen Lagerkanal 113 eingelagert bzw. aus einem Lagerkanal 113 ausgelagert werden können. Andererseits werden mittels der Lastaufnahmevorrichtung 117, insbesondere einer auf der Plattform 116 angeordneten, nicht näher dargestellten Fördervorrichtung oder der Ein- und Auslagervorrichtung, in der Vorzone einzelne Packeinheiten 2, 2' aus einer Reihe 97 oder eine gesamte Reihe 97 vom Transportlagen-Bereitstellungsplatz 111 auf die Fördertechnik 114, insbesondere die Plattform, gefördert.

Zur Übergabe der Transportlage 103 wird der Verteilwagen 107 vor einem der Transportlagen-Bereitstellungsplätze 111 positioniert, die Fördervorrichtungen am Verteilwagen 107 und am Transportlagen-Bereitstellungsplatz 111 synchron angetrieben und dabei die Transportlage 103 auf den Transportlagen-Bereitstellungsplatz 111 verlagert. Welcher der Transportlagen-Bereitstellungsplätze 111 anzufahren ist, wird von einem Rechner gemäß einer Lagerkennzahl festgelegt.

Dieser Rechner umfasst unter anderem ein Packeinheiten-Zuteilungsmodul, mittels welchem die Lagerkennzahl von jedem Lagerregal 113, wie der Lagerfüllgrad, Lagerdurchsatz und/oder Lagerbestand an Packeinheiten 2, 2' ermittelt wird. Der Lagerbestand definiert die Menge der in einem Lagerregal 113 eingelagerten, unterschiedlichen Packeinheiten 2, 2'. Der Lagerdurchsatz ist durch die Anzahl der Ein- und Auslagerungen der Packeinheiten 2, 2' in einen Lagerkanal 115 bzw. aus einem Lagerkanal 115 definiert. Der Lagerfüllgrad gibt das Verhältnis zwischen vorhandenen Lagerplätzen und belegten Lagerplätzen an.

Der Istwert der Lagerkennzahl der Lagerregale 113 wird in einem elektronischen Vergleichsmodul des Rechners, beispielsweise Lagerverwaltungsrechners, mit einem Sollwert der Lagerkennzahl der Lagerregale 115 verglichen. Unterschreitet der Istwert der Lagerkennzahl in einem der Lagerregale 112 den Sollwert, wird vom Verteilwagen 107 zumindest eine Transportlage 103 zu einem Transportlagen-Bereitstellungsplatz 111 gefördert, von welchem die Fördertechnik 114 die Packeinheiten 2, 2' entnehmen kann. Sodann verteilt die Fördertechnik 114 die Packeinheiten 2, 2' auf die Lagerkanäle 115 des nachzufüllenden Lagerregals 113. Nähert sich der Istwert hingegen dem Sollwert an oder erreicht dieser den Sollwert, bedeutet dies, dass beispielsweise in einem Lagerregal 113 der maximale Lagerbestand erreicht ist und die Transportlagen 103 zu jenen Lagerregalen 113 angefördert werden müssen, in welchen der Istwert den Sollwert unterschreitet oder unterschreiten wird, daher ein Mindestbestand erreicht ist bzw. wird. Der Istwert der Lagerkennzahl wird vom Rechner berechnet. Durch die rechnergesteuerte Verteilung der Transportlagen 103 wird im Zwischenpuffer 112 eine gegenseitige Angleichung der Lagerkennzahlen, beispielsweise eine optimale Angleichung des Lagerbestandes in den Lagerregalen 113 erreicht.

Vor diesem Hintergrund wird vom Rechner ein Nachschubauftrag ausgelöst, wenn ein Mindestbestand in einem der Lagerregale 113 erreicht ist oder erreichen wird, und damit begonnen, dass aus dem Eingangslager 4 zumindest eine Vorratseinheit 5 ausgelagert und von dieser Packeinheiten 2, 2' depalettiert werden.

Das Einlagern der depalettierten Packeinheiten 2, 2' in den Zwischenpuffer 112, wird anhand der Fig. 7 (dritte Ebene) beschreiben. Wie in der Fig. hervorgehoben, befinden sich in der Mehrzahl der Lagerkanäle 115 Packeinheiten 2, 2' derselben Abmessungsklasse. Auch wenn die "sortenreine" Lagerung der Packeinheiten 2, 2' innerhalb eines Lagerkanals 115 bevorzugt wird, können genauso gut auch Packeinheiten 2, 2' unterschiedlicher Abmessungsklasse in einem Lagerkanal 115 eingelagert werden. Die Lastaufnahmevorrichtung 117 bildet beim Einlagern eine Transportlagen-Trennvorrichtung.

Die Packeinheiten 2, 2' können nach unterschiedlichen Einlagerstrategien in den Zwischenpuffer 112 eingelagert werden.

In einer ersten Ausführung wird mittels der Lastaufnahmevorrichtung 117 vom Transportlagen-Bereitstellungsplatz 111 aus der Transportlage 103 eine erste Reihe 97 entnommen und auf die Fördertechnik 114 verlagert. Die Reihe 97 enthält entweder vier Packeinheiten 2 einer ersten Abmessungsklasse oder zwei Packeinheiten 2' einer zweiten Abmessungsklasse oder eine Mischung daraus. Befindet sich die Reihe 97 auf der Plattform 116 der Fördertechnik 114, wird von dieser bevorzugt nach dem Prinzip der chaotischen Lagerhaltung ein beliebiger, freier Lagerkanal 115 eines, der relativ zur Fördertechnik 114 auf der linken oder rechten Seite aufgestellten Lagerregale 113 angefahren und die Plattform 116 vor diesem positioniert. Danach wird mittels der Lastaufnahmevorrichtung 117 die gesamte Reihe 97 in den freien Lagerkanal 115 gefördert. Wurde die erste Reihe 97 eingelagert, wird die Fördertechnik 114 neuerlich zum Transportlagen-Bereitstellungsplatz 111 verfahren und holt die nächste Reihe 97 ab, um sie in einen Lagerkanal 115 einzulagern. Dieser Vorgang wiederholt sich solange, bis alle Reihen 97 der Transportlage 103 in unterschiedliche Lagerkanälel 115 eingelagert wurden.

In einer zweiten Ausführung wird nicht eine gesamte Reihe 97 einlagert, sondern nur einzelne Packeinheiten 2, 2' daraus. Beispielsweise werden der Transportlage 103 aus einer Reihe 97 mit vier Packeinheiten 2 einer ersten Abmessungsklasse nur zwei Packeinheiten 2 entnommen und auf die Fördertechnik 114 verlagert. Befinden sich die Packeinheiten 2 auf der Plattform 116 der Fördertechnik 114, wird von dieser ein Lagerkanal 115 eines der relativ zur Fördertechnik 114 auf der linken oder rechten Seite aufgestellten Lagerregale 113 angefahren, in welchem bereits Packeinheiten 2 der ersten Abmessungsklasse eingelagert sind. Andererseits ist es auch möglich, dass die Packeinheiten 2 in einen nach dem Prinzip der chaotischen Lagerhaltung festgelegten beliebigen, freien Lagerkanal 115 eines, der relativ zur Fördertechnik 114 auf der linken oder rechten Seite aufgestellten Lagerregals 113 eingelagert werden. Der Zwischenpuffer 112 kann demnach eine Sortierfunktion übernehmen. Diese Einlagerstrategie kann verfolgt werden, wenn auf einer Depalettiereinrichtung 6, 7 aufeinander folgende Vorratseinheiten 5 mit unterschiedlichen Packeinheiten 2, 2' depalettiert werden. Beispielsweise enthält die vorangegangene Vorratseinheit 5 Packeinheiten 2 der ersten Abmessungsklasse und die nachfolgende Vorratseinheit 5 Packeinheiten 2 der zweiten Abmessungsklasse, sodass innerhalb einer Transportlage 103 unterschiedliche Packeinheiten 2, 2' enthalten sind, wie in Fig. 5 und 6b gezeigt. Ebenso kann diese Einlagerstrategie verfolgt werden, wenn sich innerhalb einer Reihe 97 unterschiedlichen Packeinheiten 2, 2' befinden, wie in Fig. 6a, 6b gezeigt.

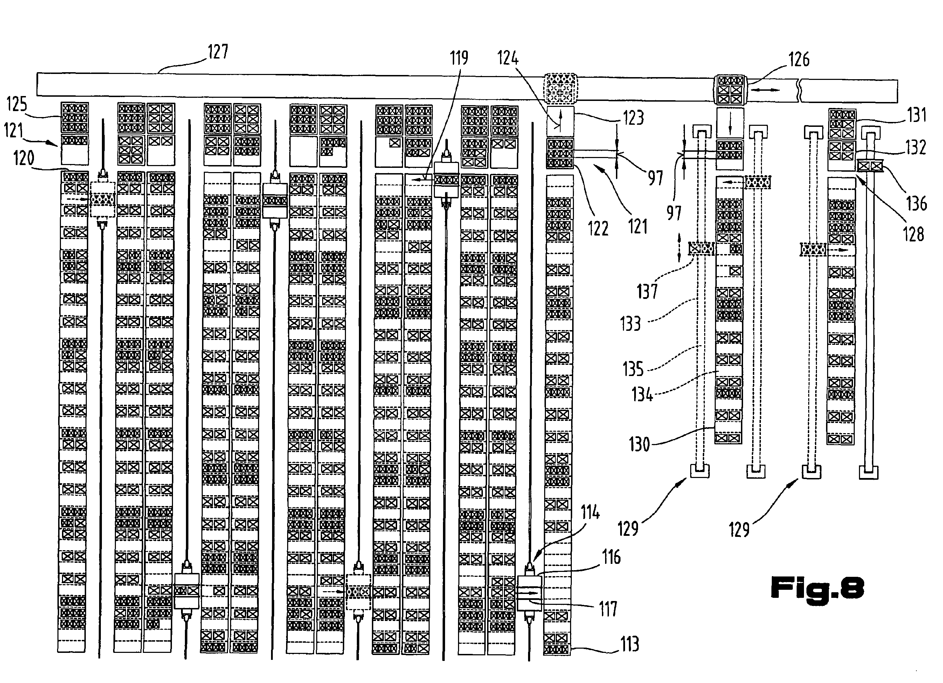

Das Auslagern der Packeinheiten 2, 2' aus dem Zwischenpuffer 112, wird anhand der Fig. 8 (vierte Ebene) beschrieben. Die Verdichtungsvorrichtung 121 ist aus Gründen der besseren Übersicht nicht näher dargestellt. Diese entspricht baulich der Verdichtungsvorrichtung 81. Dazu weist die Verdichtungsvorrichtung 121 einen Transportlagen-Verdichtungsplatz 122 und eine Ausschleusvorrichtung, beispielsweise eine Verschiebevorrichtung auf, mittels welcher die auf einem nicht näher dargestellten Bereitstellungsplatz 120 zu einer Reihe 97 gebildeten Packeinheiten 2, 2' in Förderrichtung 124 auf den Transportlagen-Verdichtungsplatz 122 gefördert wird. Der Bereitstellungsplatz 120 weist eine Förderfläche auf, auf welcher die Packeinheiten 2, 2' aufliegend gefördert werden. Die Förderfläche ist durch eine Fördervorrichtung gebildet.

Die Transportlagen-Verdichtungsplätze 122 und Umlagerplätze 123 sind in der Vorzone des Zwischenpuffers 112 jeweils in Verlängerung zu den Lagerregalen 113 angeordnet. Der Umlagerplatz 123 weist eine Fördervorrichtung auf. Die Fördertechnik 114, insbesondere die Lastaufnahmevorrichtung 117, kann die Packeinheiten 2, 2' hinsichtlich ihrer späteren, an einer Beladestation genötigten Reihenfolge ungeordnet auslagern. Die (ungeordnet ausgelagerten) Packeinheiten 2, 2' werden nach dem Auslagern in einer nicht dargestellten, rechnergesteuerten Sortiervorrichtung zugeführt, in welcher die Packeinheiten 2, 2' nach den oben beschriebenen Sortierkriterien (Abmessungsklassen oder Beladungsmuster) sortiert werden. Danach werden die Packeinheiten 2, 2' in sortierter Reihenfolge auf einen Transportlagen-Verdichtungsplatz 122 gefördert. Anderenfalls kann die Fördertechnik 114 durch die Reihenfolge der Entnahme der Packeinheiten 2, 2' aus den Lagerkanälen 115 eine Sortierfunktion übernehmen. Dabei werden die Packeinheiten 2, 2' nach den oben beschriebenen Sortierkriterien sortiert ausgelagert und in sortierter Reihenfolge zu einem Transportlagen-Verdichtungsplatz 122 gefördert.

Das Auslagern wird durch, von einem Rechner erfasste Aufträge, insbesondere Kommissionieraufträge, angestoßen und werden aus dem Zwischenpuffer 112 alle für einen Auftrag benötigten Packeinheiten 2, 2' entnommen, wobei unterschiedliche Auslagerstrategien verfolgt werden können.

In einer ersten Ausführung wird mittels der Lastaufnahmevorrichtung 117 von einem Lagerkanal 115 eine für den Auftrag benötigte gesamte Reihe 97 entnommen und auf die Fördertechnik 114 verlagert. Die Reihe 97 enthält entweder vier Packeinheiten 2 einer ersten Abmessungsklasse oder zwei Packeinheiten 2' einer zweiten Abmessungsklasse. Befindet sich die Reihe 97 auf der Plattform 116 der Fördertechnik 114, wird diese zu einem Bereitstellungsplatz 120 verfahren und die Plattform 116 vor diesem positioniert.

Danach wird mittels der Lastaufnahmevorrichtung 117, insbesondere der Fördervorrichtung oder der Ein- und Auslagerungsvorrichtung, die gesamte Reihe 97 in deren Förderrichtung 119 auf den Bereitstellungsplatz 120 gefördert. Wurde die erste Reihe 97 auf dem Bereitstellungsplatz 120 platziert, wird sie über die Ausschleusvorrichtung in Förderrichtung 124 auf den Transportlagen-Verdichtungsplatz 122 gefördert. Wird für den Auftrag eine zweite Reihe 97 benötigt, wird die Fördertechnik 114 neuerlich zu einem Lagerkanal 115 verfahren, welcher die gewünschten Packeinheiten 2, 2' enthält, und die gesamte Reihe 97 entnommen und danach zum Bereitstellungsplatz 120 gefördert. Dort angekommen wird die zweite Reihe 97 auf den Transportlagen-Verdichtungsplatz 122 verlagert. Dieser Vorgang wiederholt sich solange, bis eine "auftragsbezogene" Transportlage 125 zusammengestellt wurde. Ein Auftrag kann auch mehrere Transportlagen 125 benötigen. Die Transportlage 125 kann Packeinheiten 2, 2' der ersten und/oder zweiten Abmessungsklassen enthalten.

In einer zweiten Ausführung wird nicht eine gesamte Reihe 97 auslagert, sondern nur einzelne Packeinheiten 2, 2' daraus. Beispielsweise werden aus einer im Lagerkanal 115 eingelagerten Reihe 97 mit vier Packeinheiten 2 einer ersten Abmessungsklasse nur zwei Packeinheiten 2 benötigt. Dazu werden mittels der Lastaufnahmevorrichtung 117 von einem Lagerkanal 115 die für den Auftrag, insbesondere Kommissionierauftrag, benötigte(n) Packeinheit(en) 2, 2' entnommen und auf die Fördertechnik 114 verlagert. Befinden sich die Packeinheiten 2, 2' oder Packeinheitengruppe auf der Plattform 116 der Fördertechnik 114, wird diese zu einem Bereitstellungsplatz 120 verfahren und die Plattform 116 vor diesem positioniert. Danach werden mittels der Lastaufnahmevorrichtung 117, insbesondere der Fördervorrichtung oder der Ein- und Auslagerungsvorrichtung, die Packeinheit(en) 2, 2' in Förderrichtung 119 auf den Bereitstellungsplatz 120 gefördert. Auch können die Packeinheit(en) 2, 2' nacheinander von der Fördertechnik 114 angeliefert und zu einer Reihe 97 gebildet werden, ehe sie auf den Transportlagen-Verdichtungsplatz 122 verlagert werden. Dadurch können auf dem Bereitstellungsplatz 120 mittels der Lastaufnahmevorrichtung 117 einzelne oder gruppierte Packeinheiten 2, 2' zu einer gesamten Reihe 97 gebildet werden. Der Zwischenpuffer 112, insbesondere die Fördertechnik 114, kann demnach zur Bildung der "auftragsbezogenen" Transportlage 125 eine Sortierfunktion übernehmen.

In einer dritten, nicht näher dargestellten Ausführung wird eine gesamte Reihe 97 oder nur einzelne Packeinheiten 2, 2' unter Umgehung des Transportlagen-Verdichtungsplatz 122 direkt auf den Umlagerplatz 123 abgegeben. Dies ist beispielsweise möglich, wenn zu einem Auftrag, insbesondere Kommissionierauftrag, Packeinheiten 2, 2' nicht erst in dem noch näher zu beschreibenden Auftragspuffer eingelagert werden müssen, sondern auf schnellstem Wege einer Beladestation bereitgestellt werden sollen.

Natürlich können zur Abarbeitung eines Auftrags, insbesondere Kommissionierauftrags, die erste, zweite und/oder dritte Auslagerstrategie kombiniert werden.

Des Weiteren ist es auch möglich, dass die Verdichtungsvorrichtung durch die Lastaufnahmevorrichtung 117 gebildet ist. Die Fördertechnik 114 weist auf der Plattform 116 den Bereitstellungsplatz auf und die Lastaufnahmevorrichtung 117 bildet beim Auslagern eine die Ausschleusvorrichtung aufweisende Verdichtungsvorrichtung aus. Die Ausschleusvorrichtung ist durch die verstellbaren Mitnahmeorgane der Ein- und Auslagervorrichtung oder die Fördervorrichtung auf der Plattform 116 gebildet. Nach dieser Ausführung, wird die Plattform 116 vor dem Transportlagen-Verdichtungsplatz 122 positioniert. Danach wird mittels der die Verdichtungsvorrichtung bildenden Lastaufhahmevorrichtung 117, insbesondere der Fördervorrichtung oder der Ein- und Auslagerungsvorrichtung, eine oder mehrere Packeinheiten 2, 2' oder eine gesamte Reihe 97 in deren Förderrichtung auf den Transportlagen-Verdichtungsplatz 122 gefördert. Wurde die erste Reihe 97 auf dem Transportlagen-Verdichtungsplatz 122 platziert und werden für den Auftrag weitere Packeinheiten 2, benötigt, wird neben der bereits abgestellten ersten Reihe 97 eine zweite Reihe 97 platziert. Dieser Vorgang wiederholt sich solange, bis eine "auftragsbezogene" Transportlage 125 zusammengestellt wurde.

Die auf dem Transportlagen-Verdichtungsplatz 122 zusammengestellte "auftragsbezogene" Transportlage 125 wird danach auf einen Umlagerplatz 123 gefördert. Dort angekommen, wird die Transportlage 125 an einen rechnergesteuerten Verteilwagen 126 auf eine Förderfläche übergeben. Ein Transportlagen-Verteilsystem weist den Verteilwagen 126 auf. Vorzugsweise wird die Förderfläche von einer auf einer Plattform angeordneten Fördervorrichtung, insbesondere einem Bandförderer, ausgebildet und werden zur Übergabe der Transportlage 125 der Verteilwagen 126 vor dem Umlagerplatz 123 positioniert, die Fördervorrichtungen am Umlagerplatz 123 und am Verteilwagen 126 synchron angetrieben und dabei die Transportlage 125 auf den Verteilwagen 126 verlagert. Der Verteilwagen 126 verbindet die Umlagerplätze 123 und von diesen entfernt angeordnete Transportlagen-Bereitstellungsplätze 128 und ist entlang eines Schienensystems 127 verfahrbar.

Auch wenn im gezeigten Ausführungsbeispiel ein zweiter Verteilwagen 126 vorgesehen ist, ist es genauso gut möglich, dass das Transportlagen-Verteilsystem ausschließlich einen Verteilwagen aufweist und der erste Verteilwagen 107 die Verteilfunktion der Transportlagen 103 und 125 übernimmt.

Die "auftragsbezogene" Transportlage 125 wird mittels des Verteilwagens 126 von einem der Umlagerplätze 123 (wie in strichlierte Linien in Fig. 8 eingetragen) zu einem der Transportlagen-Bereitstellungsplätze 128 (wie in vollen Linien in Fig. 8 eingetragen) gefördert. Die Transportlagen-Bereitstellungsplätze 128 sind in einer Vorzone eines Auftragspuffers 129 vorgesehen, welcher einen Packeinheitenpuffer ausbildet.

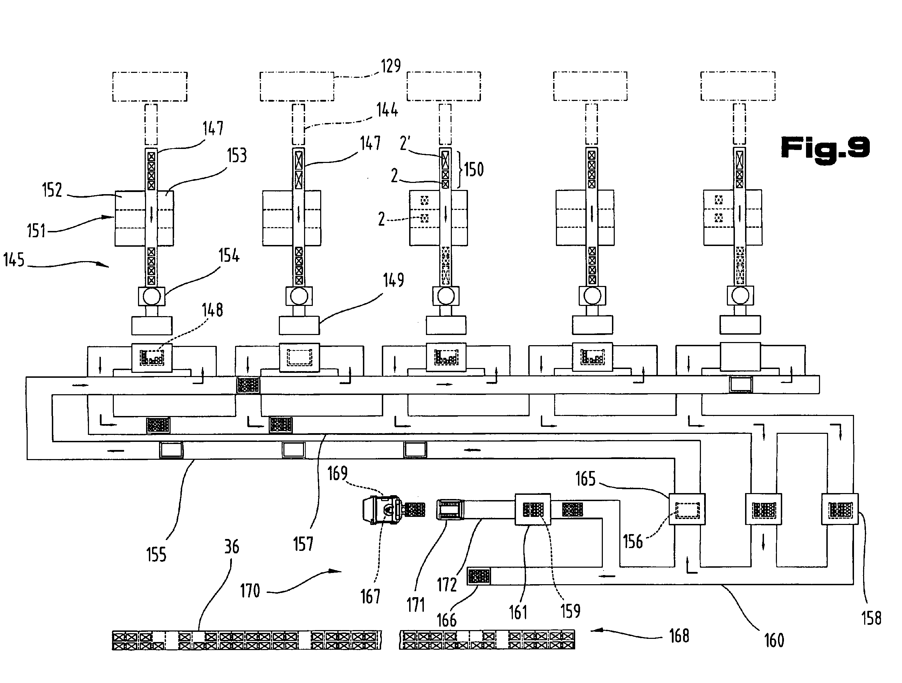

Gemäß diesem Ausführungsbeispiel sind mehrere Auftragspuffer 129 vorgesehen, wovon jeder Auftragspuffer 129 durch eine Fördertechnik mit einer Beladestation verbunden ist, wie aus Fig. 9 ersichtlich.

Der Transportlagen-Bereitstellungsplatz 128 weist eine Förderfläche auf, auf welcher die "auftragsbezogene" Transportlage 125 aufliegend gefördert wird. Die Förderfläche ist von zumindest einer Fördervorrichtung ausgebildet. Gemäß diesem Ausführungsbeispiel weist die Fördervorrichtung relativ zur Förderrichtung zwei hintereinander angeordnete Stauplätze 130, 131 auf.

Der Auftragspuffer 129 weist beispielsweise zumindest ein Lagerregal 130 und zu beiden Seiten angeordnet, rechnergesteuerte Fördertechniken 133 auf. Der Transportlagen-Bereitstellungsplatz 128 ist in Verlängerung zum Lagerregal 130 in der Vorzone angeordnet. Das Lagerregal 130 sind in einer bevorzugten Ausführung durch Fachbodenregale gebildet und werden die Packeinheiten 2, 2' ohne zusätzliches Ladehilfsmittel, wie Tablar, Palette und dgl., direkt auf den Fachboden abgelegt. Das Lagerregal 130 ist in einem Rastabstand vertikal übereinander liegende Lagerebenen auf, wobei in jeder Lagerebene mehrere "virtuelle" Lagerkanäle 134 nebeneinander angeordnet sein können. Jeder Lagerkanal 134 bildet eine Lagerstelle aus und weist in seiner Längserstreckung zumindest eine Lagerposition für zwei Packeinheiten 2 der ersten (kleinen) Abmessungsklasse oder eine Packeinheit 2' der zweiten (großen) Abmessungsklasse 2' auf. Bevorzugt sind zwei Lagerpositionen vorgesehen und können an einer Lagerstelle entweder vier Packeinheiten 2 der ersten Abmessungsklasse oder zwei Packeinheiten 2' der zweiten Abmessungsklasse oder eine Mischung daraus in einer Reihe hintereinander abgelegt werden.

Die Fördertechnik 133 umfasst einen heb- und senkbaren Hubbalken 135, auf dem eine parallel zum Lagerregal 130 an der Regalfront verfahrbare Plattform 136 montiert ist.

Auf der heb- und senkbaren Plattform 116 ist eine nicht näher dargestellte Lastaufnahmevorrichtung 137 angeordnet, die eine relativ zur Plattform 136 ausfahrbare Ein- und Auslagervorrichtung, insbesondere Teleskoparme mit verstellbaren, insbesondere verschwenkbaren Mitnahmeorganen, wie sie beispielsweise aus der US 6,923,612 B2 bekannt ist, aufweist, mittels welcher einerseits Packeinheiten 2, 2' in einen Lagerkanal 134 eingelagert bzw. aus einem Lagerkanal 112 ausgelagert werden können. Andererseits werden mittels der Lastaufnahmevorrichtung 134, insbesondere einer auf der Plattform 136 angeordneten, nicht näher dargestellten Fördervorrichtung oder der Ein- und Auslagervorrichtung, in der Vorzone einzelne Packeinheiten 2, 2' aus einer Reihe 97 oder eine gesamte Reihe 97 vom Transportlagen-Bereitstellungsplatz 128 auf die Fördertechnik 133, insbesondere die Plattform 136, gefördert. Die Lastaufnahmevorrichtung 137 bildet somit eine Transportlagen-Trennvorrichtung. Die Lastaufnahmevorrichtungen 137 der relativ zum Lagerregal 130 angeordneten Fördertechniken 133 können die Lagerkanäle 134 von beiden Seiten bedienen.

Zur Übergabe der "auftragsbezogenen" Transportlage 125 wird der Verteilwagen 126 vor einem der Transportlagen-Bereitstellungsplätze 128 positioniert, die Fördervorrichtungen am Verteilwagen 126 und am Transportlagen-Bereitstellungsplatz 128 synchron angetrieben und dabei die Transportlage 125 auf den Transportlagen-Bereitstellungsplatz 128 verlagert.

Welcher der Auftragspuffer 129, insbesondere Transportlagen-Bereitstellungsplätze 128 vom Verteilwagen 126 anzufahren ist, wird von einem Rechner gemäß einem an einer Beladestation abzuarbeitenden Auftrag, insbesondere Kommissionierauftrag, festgelegt. In einem Auftragspuffer 129 befinden sich alle oder nahezu alle für einen Auftrag, insbesondere Kommissionierauftrag, benötigten Packeinheiten 2, 2'.

Das Einlagern der Packeinheiten 2, 2' in einen Auftragspuffer 129, wird anhand der Fig. 8 (vierte Ebene) beschreiben. Wie in der Fig. dargestellt, befinden sich in einem Lagerkanal 134 stets Packeinheiten 2, 2' derselben Abmessungsklasse. Auch wenn die "sortenreine" Lagerung der Packeinheiten 2, 2' innerhalb eines Lagerkanals 134 bevorzugt wird, können genauso gut auch Packeinheiten 2, 2' unterschiedlicher Abmessungsklasse in einem Lagerkanal 134 eingelagert werden.

Die Packeinheiten 2, 2' können nach unterschiedlichen Einlagerstrategien in den Auftragspuffer 129 eingelagert werden.

In einer ersten Ausführung wird mittels der Lastaufnahmevorrichtung 137 vom Transportlagen-Bereitstellungsplatz 128 aus der Transportlage 125 eine erste Reihe 97 entnommen und auf eine der Fördertechniken 133 verlagert. Die Reihe 97 enthält entweder vier Packeinheiten 2 einer ersten Abmessungsklasse oder zwei Packeinheiten 2' einer zweiten Abmessungsklasse. Befindet sich die Reihe 97 auf der Plattform 136 der Fördertechnik 114, wird von dieser bevorzugt nach dem Prinzip der chaotischen Lagerhaltung ein beliebiger, freier Lagerkanal 134 relativ zum Lagerregal 130 von der linken oder rechten Seite angefahren und die Plattform 136 vor diesem positioniert. Danach wird mittels der Lastaufnahmevorrichtung 137 die gesamte Reihe 97 in den freien Lagerkanal 134 gefördert. Dieser Vorgang wiederholt sich solange, bis alle Reihen 97 der Transportlage 125 in unterschiedliche Lagerkanäle134 eingelagert wurden.

In einer zweiten Ausführung wird nicht eine gesamte Reihe 97 einlagert, sondern nur einzelne Packeinheiten 2, 2' daraus. Beispielsweise werden der Transportlage 125 aus einer Reihe 97 mit vier Packeinheiten 2 einer ersten Abmessungsklasse nur zwei Packeinheiten 2 entnommen und auf eine der Fördertechniken 133 verlagert. Befinden sich die Packeinheiten 2 auf der Plattform 136 der Fördertechnik 133, wird von dieser ein Lagerkanal 134 angefahren, in welchem bereits Packeinheiten 2 der ersten Abmessungsklasse eingelagert sind. Andererseits ist es auch möglich, dass die Packeinheiten 2 in einen nach dem Prinzip der chaotischen Lagerhaltung festgelegten beliebigen, freien Lagerkanal 134 relativ zum Lagerregal 130 von der linken oder rechten Seite eingelagert wird. Der Auftragspuffer 129 kann demnach eine Sortierfunktion übernehmen.

Das Auslagern der Packeinheiten 2, 2' aus dem Auftragspuffer 129, wird anhand der Fig. 9 (fünfte Ebene) beschrieben. Es wird begonnen, sobald an der, von zumindest einem Auftragspuffer 129 mit Packeinheiten 2, 2' versorgten Beladestation 145 ein vorangegangener Auftrag, insbesondere Kommissionierauftrag, vorliegt. Die Packeinheiten 2, 2' können - hinsichtlich ihrer späteren Beladereihenfolge in einem Ladestapel auf einem Ausliefergebinde 148 - ungeordnet in den Auftragspuffer 129 eingelagert werden.

Nach einer ersten Ausführung erfolgt das Auslagern aus dem Auftragspuffer 129 in einer definierten Reihenfolge nach, von einem Rechner vorgegebenen Sortierkriterien.

Das Sortieren der Packeinheiten 2, 2' in die benötigte Beladereihenfolge wird in einer ersten und zweiten Sortierstufe erreicht. Das Sortierkriterium ist durch die räumliche Beladungskonfiguration im Ladestapel auf dem Ausliefergebinde 148, beispielsweise Rollcontainer, Palette, bestimmt und wird daraus die Beladereihenfolge von einem Rechner ermittelt. Die Packeinheiten 2, 2' sind über einen Datenträger eindeutig identifizierbar und kann über die im Rechner in einer Datenbank gespeicherten Abmessungen die bezüglich der Stabilität, Volumenausnutzung und/oder Höhe und dgl. optimierten räumlichen (dreidimensionalen) Beladungskonfiguration eines oder mehrerer Ladestapel auf der oder den Ausliefergebinden 148 ermittelt werden. Aus der Beladungskonfiguration wird eine Beladereihenfolge ermittelt, in welcher der Ladestapel auf dem Ausliefergebinde 148 aufgebaut wird. Der Ladestapel ist möglichst stabil und transportfähig, wenn die schweren Packeinheiten 2, 2' im unteren Teil des Ladestapels und die leichtere Packeinheiten 2, 2' im oberen Teil des Ladestapels gelagert sind. Ebenso sind empfindlichere Packeinheiten 2, 2' im oberen Teil des Ladestapels besser untergebracht. Der Ladestapel soll außerdem möglichst dicht gepackt und möglichst hoch sein, um das Ladevolumen in einem Ausliefer-Transportfahrzeug möglichst gut nutzen zu können. Die Packeinheiten 2, 2' müssen demnach in einer durch die Beladungskonfiguration festgelegten Beladereihenfolge aufeinander folgend der Beladestation 145 zugeführt. werden. In gezeigter Ausführung weist die Beladestation 145 zumindest eine automatische Stapelvorrichtung 149 auf. Genauso gut kann die Stapelung auch durch einen Lagerarbeiter manuell durchgeführt werden.

Werden die Packeinheiten 2, 2' beim Auslagern sortiert, bildet der Auslagervorgang eine erste Sortierstufe und können dabei unterschiedlichen Auslagerstrategien verfolgt werden.

Einerseits werden mittels der Lastaufnahmevorrichtung 137 von einem Lagerkanal 134 die für den Auftrag, insbesondere Kommissionierauftrag, benötigten Packeinheiten 2, 2' reihenweise entnommen und die Reihen 97 nacheinander auf eine der Fördertechniken 133 verlagert. Danach werden die Reihen 97 nacheinander als Packeinheitengruppen 150 auf einen Umlagerplatz 144 gefördert. Dieser Vorgang wiederholt sich solange, bis der Auftrag abgearbeitet wurde. Der Umlagerplatz 144 ist beispielsweise als Fördervorrichtung ausgebildet. Am Umlagerplatz 144 angekommen werden die Packeinheitengruppen 150 nacheinander auf eine Beschickungsförderbahn 147 (Fördertechnik) gefördert.

Andererseits wird nicht eine gesamte Reihe 97 auslagert, sondern nur die Anzahl der benötigten Packeinheiten 2, 2' daraus, damit ein Auftrag, insbesondere Kommissionierauftrag, fertig gestellt werden kann. Werden beispielsweise noch zwei Packeinheiten 2 der ersten Abmessungsklasse für den Auftrag benötigt und sind alle Lagerkanäle 134, welche Packeinheiten 2 der ersten Abmessungsklasse enthalten, vollständig aufgefüllt, so werden aus einem dieser Lagerkanäle 134 mittels der Lastaufnahmevorrichtung 117 zwei Packeinheiten 2 (Packeinheitengruppe 150) entnommen, auf die Fördertechnik 114 verlagert und von dieser zum Umlagerplatz 144 gefördert. Dort angekommen, wird die Packeinheitengruppe 150 auf eine Beschickungsförderbahn 147 gefördert.

Die auf der Beschickungsförderbahn 147 in der richtigen Reihenfolge (sortiert) ankommenden Packeinheitengruppe 150 werden erforderlichenfalls zur zweiten Sortierstufe (Fig. 9) und danach zur Beladestation 145 gefördert.

In der zweiten Sortierstufe wird innerhalb einer Packeinheitengruppe 150 eine Sortierung nach, von einem Rechner vorgegebenen Sortierkriterien durchgeführt.

Hierzu ist eine Sortiervorrichtung 151 vorgesehen, die einen an die Beschickungsförderbahn 147 angeschlossen Pufferbahnhof 152 mit einem oder mehreren Pufferplätzen und auf der gegenüber liegenden Seite eine Ausschleusvorrichtung 153 aufweist. Die Ausschleusvorrichtung 153 weist beispielsweise je Pufferplatz eine Schiebevorrichtung auf. Der Pufferbahnhof 152 weist je Pufferplatz eine nicht dargestellte Einschleusvorrichtung auf, die beispielsweise durch einen Band- oder Riemenförderer und dgl. gebildet ist. Ein- und Ausschleusvorrichtung können auch eine Einheit bilden.

Die Sortiervorrichtung 151, insbesondere die Ein- und Ausschleusvorrichtung werden von einem Rechner (Steuerung) angesteuert, wenn eine Packeinheit 2, 2' von der Beschickungsförderbahn 147 in den Pufferbahnhof 152 auszuschleusen oder aus dem Pufferbahnhof 152 wieder auf die Beschickungsförderbahn 147 einzuschleusen ist.

Werden die Packeinheiten 2, 2' innerhalb einer jeden Packeinheitengruppe 150 in der aus der Beladungskonfiguration ermittelten richtigen Reihenfolge gefördert, passieren diese die zweite Sortierstufe und werden direkt der Beladestation 145 zugeführt.

Werden hingegen innerhalb einer Packeinheitengruppe 150 die Packeinheiten 2, 2' in einer durch die Beladungskonfiguration festgelegten, falschen Reihenfolge angeliefert, werden die Packeinheiten 2, 2' innerhalb dieser Packeinheitengruppe 150 endsortiert. Muss beispielsweise in der ersten Packeinheitengruppe 150 die in Förderrichtung - gemäß eingetragenem Pfeil - hinterste Packeinheit 2' an erste Stelle vorgereiht werden, werden die in Förderrichtunggemäß eingetragenem Pfeil - vordersten zwei Packeinheiten 2' über den Ausschleusvorrichtung 153 von der Beschickungsförderbahn 147 auf den Pufferbahnhof 152 ausgeschleust, sodass die dritte Packeinheit 2' an den "geparkten" Packeinheiten 2 vorbeigefördert werden kann, ehe die "geparkten" Packeinheiten 2 über die Einschleusvorrichtung wieder auf die Beschickungsförderbahn 147 eingeschleust und der nunmehr an erster Stelle vorangereihten Packeinheit 2' nachgereiht werden, wie in strichlierte Linien an der mittleren Beschickungsförderbahn 147 dargestellt. Durch diese Sortierung kann eine endgültige Reihenfolge, in der die Packeinheiten 2, 2' auf dem Ausliefergebinde 148 gestapelt werden, hergestellt werden.

Eine Endsortierung in der zweiten Sortierstufe ist beispielsweise erforderlich, wenn die in Förderrichtung - gemäß eingetragenem Pfeil - hinterste Packeinheit 2, 2' das größte Gewicht aufweist, aber noch in eine untere Stapellage gestapelt werden muss, während die in Förderrichtung - gemäß eingetragenem Pfeil - voran gereihten Packeinheiten 2, 2' bereits in die darüber liegende Stapellage gestapelt werden. Dadurch kann ein besonders stabiler Ladestapel hergestellt werden. Ebenso kann diese Sortierung im Hinblick auf Volumenausnutzung, Zerbrechlichkeit, Höhe des Ladestapels und dgl. endsortiert werden.

Nach einer zweiten Ausführung, werden die Packeinheiten 2, 2' hinsichtlich ihrer späteren, an einer Beladestation 145 genötigten Reihenfolge aus dem Auftragspuffer 129 ungeordnet ausgelagert. Die ungeordnet ausgelagerten Packeinheiten 2, 2' werden nach dem Auslagern der rechnergesteuerten Sortiervorrichtung 151 zugeführt, in welcher die Packeinheiten 2, 2' nach den oben beschriebenen Sortierkriterien (Beladungskonfiguration) sortiert werden. Die Fördertechnik 133 hat wahlfreien Zugriff auf eine Reihe 97 und/oder einzelne Packeinheiten 2, 2'. Es ist nach dieser Ausführung nur eine Sortierstufe nötig.

Natürlich können zur Abarbeitung eines Auftrags, insbesondere Kommissionierauftrags, die erste und zweite Auslagerstrategie kombiniert werden.

Die in die erforderliche Beladungsreihenfolge sortierten Packeinheiten 2, 2' werden anschließend zur Beladestation 145 gefördert.

Kurz vor der Beladestation 145 können die Packeinheiten 2, 2' gegebenenfalls noch an einer Drehvorrichtung 154 nachgedreht werden, um die vorberechnete Beladungskonfiguration im Ladestapel abbilden zu können.

Wie in Fig. 9 ersichtlich, sind mehrere Beladestationen 145 vorgesehen, die jeweils eine Ausliefergebinde-Wechseleinrichtung aufweisen, die an eine Födervorrichtung 155 zum Antransport leerer Auslieferungsgebinde 148 und einer darauf angeordneten Ladehilfe 156 und eine Födereinrichtung 157 zum Abtransport von beladenen Ausliefergebinden 148 anschließt. Die Ladehilfe 156 umgibt den sich bildenden Ladestapel von drei Seiten und dient als Abstützfläche für eine Schiebebewegung der Packeinheiten 2, 2' in Horizontalrichtung beim Stapeln.

Sobald ein Ausliefergebinde 148 mit einem Ladestapel vollständig beladen ist, tauscht die Ausliefergebinde-Wechseleinrichtung, die nach diesem Ausführungsbeispiel einen antreibbaren Rollenförderer aufweist, das beladene Ausliefergebinde 148 durch ein leeres Ausliefergebinde 148 mit einer darauf angeordneten Ladehilfe 156 aus. Das beladene Ausliefergebinde 148 wird gemeinsam mit der Ladehilfe 156 durch die Födervorrichtung 157 zu einer Wickelstation 158 gefördert, in der das beladene Ausliefergebinde 148 relativ zur Ladehilfe 156 nach oben oder unten bewegt wird und gleichzeitig eine freigelegte Stapellage mit einer Folie zur Stabilisierung des Ladestapels umwickelt wird.

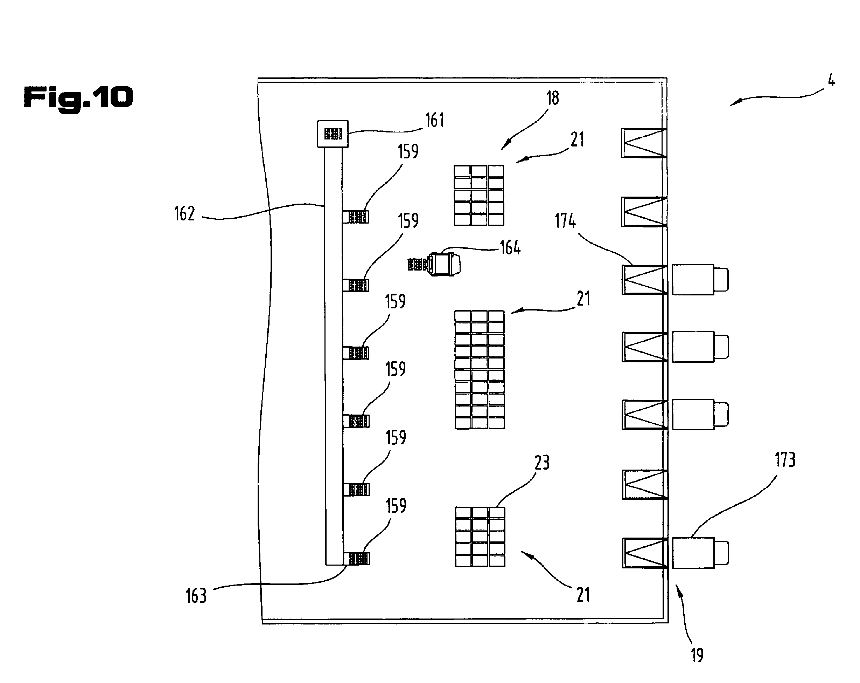

Wie in den Fig. 9 und 10 ersichtlich, werden die umwickelten Ladestapel auf den Ausliefergebinden 148 als versandfertige Liefereinheiten 159 von einer Fördervorrichtung 160 über eine Hebevorrichtung 161 auf die Anliefer- und Versandebene abgesenkt und über die Auslagerbahn 162 zu Abgabestationen 163 gefördert.

Die leeren Ladehilfen 156 werden ebenfalls durch die Födervorrichtung 160 von der Wickelstation 158 zu einer Nachrüstvorrichtung 165 gefördert, wo die Ladehilfe 156 mit einem Ausliefergebinde 148 versehen wird und dann wieder über die Födervorrichtung 155 einer der Stapelvorrichtungen 148 zugeführt wird.

Andererseits ist es auch möglich, dass auf den umwickelten Ladestapel noch Packeinheiten, insbesondere "Langsamdreher", wie Sperrigteile, geladen werden müssen, wozu die "teilfertige" Liefereinheit 159 von der Födervorrichtung 160 zu einer Abgabestation 166 gefördert und dort ein Lagerarbeiter 167 die noch fehlenden Sperrigteile auflädt.

Die Sperrigteile werden im äußeren Lagebereich 168 des Eingangslagers 4 zwischengelagert. Die "teilfertige" Liefereinheit 159 ist mit einem Datenträger (nicht dargestellt), insbesondere einem Barcode, versehen und kann durch Auslesen der darin enthaltenen Daten diese Liefereinheit 159 identifiziert und dem Lagerarbeiter 167 auf einer Ein- und/oder Ausgabevorrichtung 169 angezeigt werden, welcher oder welche Sperrigteil(e) auf die "teilfertige" Liefereinheit 159 noch in einer weiteren Beladestation 170 kommissioniert werden müssen. Die Beladestation 170 umfasst die Abgabe- und Aufgabestation 166, 171. Hat der Lagerarbeiter 167 die noch fehlenden Sperrigteile gemäß einem Kommissionierauftrag kommissioniert, wird über die Ein- und/oder Ausgabevorrichtung 169 das Ende des Kommissioniervorganges bestätigt. Die Sperrigteile werden vom Lagerarbeiter 167 über einen Verteilwagen direkt aus dem Lagerbereich 168 für die Sperrigteile im Eingangslager 4 entnommen.

Die fertig beladenen Liefereinheiten 159 werden sodann an einer Aufgabestation 171 abgestellt und durch eine Födervorrichtung 172 zu der Hebevorrichtung 161 gefördert und von dieser auf die Anliefer- und Versandebene abgesenkt, wo sie durch die Auslagerbahn 162 zu den Abgabestationen 163 gefördert, von einer Konsolidierungsperson entnommen und entsprechend der Auslieferreihenfolge auf die Stellplätze 23 gebracht werden.

Die auf den Abgabestationen 163 bereitgestellten Liefereinheiten 159 werden von einer Konsolidierungsperson vorzugsweise mittels eines Gabelstaplers 164 abgeholt und zu den Stellplätzen 23 in den Ausgangspufferzonen 21 transportiert und dort in der durch den Rechner gemäß einem Kundenauftrag festgelegten Auslieferreihenfolge abgestellt.

Ist ein Kundenauftrag im Konsolidierungsbereich 18 fertig zusammengestellt, werden die Liefereinheiten 159 am Warenausgang 19 auf die Ausliefer-Transportfahrzeug 173, insbesondere Lastwagen, geladen, die an Auslieferungsstationen 174 andocken.

Wie aus dem oben stehenden hervorgeht, ist es von Vorteil, wenn die Packeinheiten 2, 2' ohne Ladehilfsmittel, wie Tablar und dgl., direkt auf einer Förderfläche der Fördertechniken 68, 96, 107, 126, 147, der Bereitstellungsplätze 69, 120, der Transportlagen-Verdichtungsplätze 98, 122 und der Transportlagen-Bereitstellungsplätze 111, 128 durch das gesamte Lagersystem 1 gefördert und in den Zwischen- und Auftragspuffern 112, 129 direkt auf einer Lagerfläche der Lagerkanäle (Lagerstellen) 115, 134 abgelegt werden.

Abschließend sei noch darauf hingewiesen, dass auf einem Bereitstellungsplatz 69, 120 in Förderrichtung 70, 119 mehrere Reihen 97 parallel nebeneinander gebildet werden können und gleichzeitig mehrere Reihen 97 in Förderrichtung 100, 124 auf einen Transportlagen-Verdichtungsplatz 98, 122 verlagert werden können.

Die Ausführungsbeispiele zeigen mögliche Ausführungsvarianten des Lagersystems 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Lagersystem 1 dieses bzw. dessen Bestandteile teilweise unmaßstäblich und/oder vergrößert und/oder verkleinert dargestellt wurden.

### Bezugszeichenaufstellung

| | | | |
|---|---|---|---|
| 1 | Kommissioniersystem | 49 | Förderumlaufbahn |
| 2 | Packeinheit | 50 | Einlagerbahn |
| 3 | Wareneingang | | |
| 4 | Eingangslager | 51 | Auslagerbahn |
| 5 | Vorratseinheit | 52 | |
| | | 53 | Förderbahn |
| 6 | Depalettiereinrichtung | 54 | Förderbahn |
| 7 | Depalettiereinrichtung | 55 | Verbindungsbahn |
| | | | |
| 18 | Konsolidierungsbereich | 56 | Umsetzfördervorrichtung |
| 19 | Warenausgang | 57 | Umsetzfördervorrichtung |
| 20 | Eingangspufferzone | 58 | Stapelvorrichtung |
| | | 59 | Sortiereinrichtung |
| 21 | Ausgangspufferzone | 60 | Sammelstation |
| 22 | Stellplatz | | |
| 23 | Stellplatz | 61 | Hebevorrichtung |
| 24 | Anlieferstation | 62 | Pufferplatz |
| 25 | Lieferanten-Transportfahrzeug | | |
| | | 68 | Fördertechnik |
| 26 | Lagerarbeiter | 69 | Bereitstellungsplatz |
| 27 | Verteilfahrzeug | 70 | Förderrichtung |
| 28 | Aufgabestation | | |
| 29 | Förderbahn | 71 | Lückenweite |
| 30 | Ein- und/oder Ausgabevorrichtung | 72 | Vorrichtung |
| | | 73 | Vorrichtung |
| 31 | Prüfstation | 74 | Ausschleusvorrichtung |
| 32 | Anliefergebinde | 75 | Drehvorrichtung |
| 33 | Lesegerät | | |
| 34 | Lagerbereich | 76 | Kippvorrichtung |
| 35 | Lagerbereich | 77 | Ausrichtvorrichtung |
| | | 79 | Pufferfördervorrichtung |
| 36 | Lagerregal | 80 | Pufferfördervorrichtung |
| 37 | Gasse | | |
| 38 | Lagerkanal | 81 | Verdichtungsvorrichtung |
| 39 | Föderumlaufbahn | 82 | Erfassungsmittel |
| 40 | Einlagerbahn | 83 | Drehvorrichtung |
| | | 84 | Erfassungsmittel |
| 41 | Verteilerbahn | 85 | Sortiervorrichtung |
| 42 | Bereitstellungsbahn | | |
| 43 | Förderfahrzeug | 86 | Fördervorrichtung |
| 44 | Umsetzfördervorrichtung | 87 | Pufferbahnhof |
| 45 | Plattform | 88 | Ausschleusvorrichtung |
| | | | |
| 46 | Fördervorrichtung | 95 | Abstand |
| 47 | Ein- und Auslagervorrichtung | | |
| 48 | Förderumlaufbahn | 96 | Fördertechnik |
| 97 | Reihe | 145 | Beladestation |
| 98 | Transportlagen-Verdichtungsplatz | | |
| 99 | Ausschleusvorrichtung | 147 | Beschichtungsförderbahn |
| 100 | Förderrichtung | 148 | Ausliefergebinde |
| | | 149 | Stapelvorrichtung |
| 102 | Abstand | 150 | Packeinheitengruppe |
| 103 | Transportlage | | |
| 104 | Fördervorrichtung | 151 | Sortiervorrichtung |
| 105 | Fördervorrichtung | 152 | Pufferbahnhof |
| | | 153 | Ausschleusvorrichtung |
| 106 | Umlagerplatz | 154 | Drehvorrichtung |
| 107 | Verteilwagen | 155 | Fördervorrichtung |
| 108 | Schienensystem | | |
| 109 | Stauplatz | 156 | Ladehilfe |
| 110 | Stauplatz | 157 | Fördervorrichtung |
| | | 158 | Wickelstation |
| 111 | Transportlagen-Bereitstellungsplatz | 159 | Liefereinheit |
| 112 | Zwischenpuffer | 160 | Fördervorrichtung |
| 113 | Lagerregal | | |
| 114 | Fördertechnik | 161 | Hebevorrichtung |
| 115 | Lagerkanal | 162 | Auslagerbahn |
| | | 163 | Abgabestation |
| 116 | Plattform | 164 | Gabelstapler |
| 117 | Lastaufnahmevorrichtung | 165 | Nachrüstvorrichtung |
| 119 | Förderrichtung | | |
| 120 | Bereitstellungsplatz | 166 | Abgabestation |
| | | 167 | Lagerarbeiter |
| 121 | Verdichtungsvorrichtung | 168 | Lagerbereich |
| 122 | Transportlagen-Verdichtungsplatz | 169 | Ein- und/oder Ausgabevorrichtung |
| 123 | Umlagerplatz | 170 | Beladestation |
| 124 | Förderrichtung | | |
| 125 | Transportlage | 171 | Aufgabestation |
| | | 172 | Fördervorrichtung |
| 126 | Verteilwagen | 173 | Ausliefer-Transportfahrzeug |
| 127 | Schienensystem | 174 | Auslieferungsstation |
| 128 | Transportlagen-Bereitstellungsplatz | | |
| 129 | Auftragspuffer | | |
| 130 | Lagerregal | | |
| | | | |
| 131 | Stauplatz | | |
| 132 | Stauplatz | | |
| 133 | Fördertechnik | | |
| 134 | Lagerkanal | | |
| 135 | Hubbalken | | |
| | | | |
| 136 | Plattform | | |
| 137 | Lastaufnahmevorrichtung | | |
| | | | |
| 144 | Umlagerplatz | | |

## Patentansprüche

1. Verfahren zum Verteilen von Packeinheiten (2, 2') in einem automatisierten Lagersystem (1), bei dem die Packeinheiten (2, 2') auf einen Bereitstellungsplatz (69) gefördert und in Förderrichtung (70) zu Reihen (97) gebildet und die Reihen (97) zu einer ersten Transportlage (103) mit mehreren Reihen (97) zusammengestellt werden, welche von einem Transportlagen-Verteilsystem (107) auf einer Förderfläche übernommen und zu einem ersten Packeinheitenpuffer (112) gefördert wird, wonach die Packeinheiten (2, 2') der Transportlage (103) von einer Fördertechnik (114) übernommen und auf Lagerstellen (115) verteilt werden, **dadurch gekennzeichnet, dass** nach dem Erfassen eines Auftrags, insbesondere Kommissionierauftrags, die für dessen Abarbeitung benötigten Packeinheiten (2, 2') von der Fördertechnik (114) von zumindest einer der Lagerstellen (115) des ersten Packeinheitenpuffers (112) entnommen und in Reihen (97) einer zweiten Transportlage (125) zusammengestellt werden, welche vom automatisierten Transportlagen-Verteilsystem (107; 126), insbesondere einem rechnergesteuertem Verteilwagen, auf einer Förderfläche übernommen und zu einer Beschickungsförderbahn (147) einer Beladestation (145) oder zu einem zweiten Packeinheitenpuffer (129) gefördert wird, wobei im zweiten Packeinheitenpuffer (129) die Packeinheiten (2, 2') der zweiten Transportlage (125) von einer Fördertechnik (133) auf Lagerstellen (130) verteilt werden.

2. Verfahren nach Anspruch 1, **dadurch gekennzeichnet, dass** die Packeinheiten (2, 2') einer Transportlage (103; 125) auf eine oder mehrere Lagerstelle(n) (115; 134) verteilt werden.

3. Verfahren nach Anspruch 1, **dadurch gekennzeichnet, dass** die Packeinheiten (2, 2') vor dem Zusammenstellen der Transportlage (103; 125) in einer Sortiervorrichtung (85) sortiert werden.

4. Verfahren nach Anspruch 3, **dadurch gekennzeichnet, dass** zu den Packeinheiten (2, 2') Packeinheiten-Eigenschaften, insbesondere die Abmessungen, erfasst und Abmessungsklassen ermittelt werden und dass die Packeinheiten (2, 2') je nach ihrer Abmessung den Abmessungsklassen zugeteilt und vor dem Zusammenstellen der Transportlage (103; 125) in einer Sortiervorrichtung (85) entsprechend den Abmessungsklassen sortiert werden.

5. Verfahren nach Anspruch 3, **dadurch gekennzeichnet, dass** von den Packeinheiten (2, 2') Packeinheiten-Eigenschaften, insbesondere die Abmessungen, erfasst und ein Beladungsmuster der Packeinheiten (2, 2') für eine Transportlage (103; 125) ermittelt wird und die Packeinheiten (2, 2') entsprechend dem Beladungsmuster sortiert werden.

6. Verfahren nach einem der Ansprüche 1 bis 5, **dadurch gekennzeichnet, dass** innerhalb einer Reihe (97) der Transportlage (103; 125) Packeinheiten (2, 2') unterschiedlicher Abmessungsklassen gruppiert werden.

7. Verfahren nach einem der Ansprüche 1 bis 5, **dadurch gekennzeichnet, dass** die Packeinheiten (2, 2') von Vorratseinheiten (5) entnommen und auf einer Fördertechnik (68) vereinzelt zur Sortiervorrichtung (85) und/oder einer Verdichtungsvorrichtung (81) gefördert werden, letztere die Reihen (97) nacheinander vom Bereitstellungsplatz (69) auf einen Transportlagen-Verdichtungsplatz (98) fördert und zu einer Transportlage (103) zusammenstellt.

8. Verfahren nach Anspruch 1, **dadurch gekennzeichnet, dass** für die Packeinheiten (2, 2') Packeinheiten-Eigenschaften, insbesondere die Abmessungen, erfasst und diesen Abmessungsklassen zugeordnet werden und dass eine Solllage der Packeinheiten (2, 2') für eine Reihe (97) ermittelt wird und dass die Packeinheiten (2, 2') in der Solllage auf dem Bereitstellungsplatz (69) bereitgestellt werden.

9. Verfahren nach Anspruch 8, **dadurch gekennzeichnet, dass** von den mittels der Fördertechnik (68) angeförderten Packeinheiten (2, 2') eine Istlage erfasst und von einer Manipulationsvorrichtung (75, 76) in die Solllage verbracht werden, wenn die Istlage von der Solllage abweicht.

10. Verfahren nach einem der Ansprüche 1 bis 9, **dadurch gekennzeichnet, dass** die Packeinheiten (2, 2') von einer Ausrichtvorrichtung (77) relativ zur Förderrichtung (70) in eine Solllage gebracht werden.

11. Verfahren nach einem der Ansprüche 1 bis 10, **dadurch gekennzeichnet, dass** die Packeinheiten (2, 2') innerhalb einer Reihe (97) und die Reihen (97) innerhalb einer Transportlage (103, 125) zueinander mit gegenseitigem Abstand (92, 102) manipuliert, insbesondere auf der Förderfläche positioniert werden.

12. Verfahren nach einem der Ansprüche 1 bis 11, **dadurch gekennzeichnet, dass** die erste Transportlage (103) auf einer die Förderfläche ausbildenden Fördertechnik (96) vom Transportlagen-Verdichtungsplatz (98) zu einem Umlagerplatz (106) gefördert und an diesem vom automatisierten Transportlagen-Verteilsystem (107), insbesondere einem rechnergesteuerten Verteilwagen, übernommen und von diesem zu einem von mehreren Transportlagen-Bereitstellungsplätzen (111) von einem ersten Packeinheitenpuffer (112) gefördert wird.

13. Verfahren nach einem der Ansprüche 1 bis 12, **dadurch gekennzeichnet, dass** die Packeinheiten (2, 2') der ersten Transportlage (103) vor ihrer Einlagerung in den ersten Packeinheitenpuffer (112) durch eine Trennvorrichtung (117) in Reihen (97) aufgeteilt nacheinander auf die Fördertechnik (114) übernommen und jeweils eine Reihe (97) an eine der Lagerstellen (115) abgegeben wird.

14. Verfahren nach einem der Ansprüche 1 bis 12, **dadurch gekennzeichnet, dass** die Packeinheiten (2, 2') von einer Reihe (97) der ersten Transportlage (103) vor ihrer Einlagerung in den ersten Packeinheitenpuffer (112) durch eine Trennvorrichtung (117) in eine einzige oder mehrere Packeinheiten (2, 2') aufgeteilt auf die Fördertechnik (114) übernommen und an eine der Lagerstellen (115) abgegeben werden.

15. Verfahren nach Anspruch 14, **dadurch gekennzeichnet, dass** die Packeinheiten (2, 2') von der Fördertechnik (114) nach Abmessungsklassen sortiert an die Lagerstellen (115) des ersten Packeinheitenpuffers (112) abgegeben werden.

16. Verfahren nach Anspruch 1, **dadurch gekennzeichnet, dass** zur Bildung der zweiten Transportlage (125) die Packeinheiten (2, 2') im ersten Packeinheitenpuffer (112) jeweils in Reihen (97) von den Lagerstellen (115) mittels der Fördertechnik (114) entnommen und zu einem Transportlagen-Verdichtungsplatz (122) gefördert und von einer Verdichtungsvorrichtung (121) zur zweiten Transportlage (125) zusammengestellt werden.

17. Verfahren nach Anspruch 1, **dadurch gekennzeichnet, dass** zur Bildung der zweiten Transportlage (125) einzelne oder mehrere Packeinheiten (2, 2') im ersten Packeinheitenpuffer (112) von einer oder mehreren Lagerstellen (115) mittels der Fördertechnik (114) entnommen und zu einem Transportlagen-Verdichtungsplatz (122) gefördert und von einer Verdichtungsvorrichtung (121) in dessen Förderrichtung (119) jeweils zu Reihen (97) gebildet und/oder die Reihen (97) zur zweiten Transportlage (125) zusammengestellt werden.

18. Verfahren nach einem der Ansprüche 1 bis 17, **dadurch gekennzeichnet, dass** die Packeinheiten (2, 2') der zweiten Transportlage (125) vor ihrer Einlagerung in den zweiten Packeinheitenpuffer (129) durch eine Trennvorrichtung (137) in Reihen (97) aufgeteilt nacheinander auf die Fördertechnik (133) übernommen und jeweils eine Reihe (97) an eine der Lagerstellen (134) abgegeben wird.

19. Verfahren nach einem der Ansprüche 1 bis 17, **dadurch gekennzeichnet, dass** die Packeinheiten (2, 2') von einer Reihe (97) der zweiten Transportlage (125) vor ihrer Einlagerung in den zweiten Packeinheitenpuffer (129) durch eine Trennvorrichtung (137) in eine einzige oder mehrere Packeinheiten (2, 2') aufgeteilt auf die Fördertechnik (133) übernommen und an eine der Lagerstellen (134) abgegeben werden.

20. Verfahren nach Anspruch 19, **dadurch gekennzeichnet, dass** die Packeinheiten (2, 2') von der Fördertechnik (133) nach Abmessungsklassen sortiert an die Lagerstellen (134) des zweiten Packeinheitenpuffers (129) abgegeben werden.

21. Verfahren nach Anspruch 1, **dadurch gekennzeichnet, dass** im zweiten Packeinheitenpuffer (129) alle für einen Auftrag, insbesondere Kommissionierauftrag, benötigten Packeinheiten (2, 2') eingelagert werden und dass die Packeinheiten (2, 2') von der Fördertechnik (133) vereinzelt oder jeweils in Reihen (97) als Packeinheitengruppen (150) ausgelagert und anschließend von einer Sortiervorrichtung (151) in eine durch ihre räumliche Beladungskonfiguration für einen Ladestapel auf einem Ausliefergebinde (148) ermittelte Beladungsreihenfolge sortiert und in dieser Reihenfolge zu einer Beschickungsförderbahn (147) einer Beladestation (145) gefördert werden.

22. Verfahren nach Anspruch 1, **dadurch gekennzeichnet, dass** im zweiten Packeinheitenpuffer (129) alle für einen Auftrag, insbesondere Kommissionierauftrag, benötigten Packeinheiten (2, 2') eingelagert werden und dass die Packeinheiten (2, 2') jeweils in Reihen (97) als Packeinheitengruppen (150) von der Fördertechnik (133) in einer definierten Reihenfolge sortiert ausgelagert und zu einer Beschickungsförderbahn (147) einer Beladestation (145) gefördert werden.

23. Verfahren nach Anspruch 22, **dadurch gekennzeichnet, dass** die Packeinheiten (2, 2') innerhalb einer Packeinheitengruppe (150) von einer Sortiervorrichtung (151) in eine durch ihre räumliche Beladungskonfiguration für einen Ladestapel auf einem Ausliefergebinde (148) ermittelte Beladungsreihenfolge sortiert und anschließend in dieser Reihenfolge zu einer Beschickungsförderbahn (147) einer Beladestation (145) gefördert werden.

24. Lagersystem (1), insbesondere zur Durchführung des Verfahrens nach einem der Ansprüche 1 bis 23, umfassend
einen Bereitstellungsplatz (69) für Packeinheiten (2, 2'),
eine erste Verdichtungsvorrichtung (81) zum Zusammenstellen der Packeinheiten (2, 2') zu einer ersten Transportlage (103) mit mehreren Reihen (97),
einen ersten Packeinheitenpuffer (112) mit Lagerstellen (115) für die Packeinheiten (2, 2'), ein Transportlagen-Verteilsystem (107), welches die Transportlage (103) auf einer Förderfläche zum Packeinheitenpuffer (112) transportiert, und
eine Fördertechnik (114), welche die Packeinheiten (2, 2') der Transportlage (103) auf die Lagerstellen (115) verteilt, **gekennzeichnet durch**
eine zweite Verdichtungsvorrichtung (121) zum Zusammenstellen der Packeinheiten (2, 2') zu einer zweiten Transportlage (125) mit mehreren Reihen (97) gemäß einem Auftrag, insbesondere Kommissionierauftrag,
einen zweiten Packeinheitenpuffer (129) mit Lagerstellen (134) zur temporären Lagerung von Packeinheiten (2, 2') zu einem Auftrag und mit einer Fördertechnik (133) zur Verteilung der Packeinheiten (2, 2') der zweiten Transportlage (125) auf die Lagerstellen (134),
ein Transportlagen-Verteilsystem (107; 126), insbesondere ein rechnergesteuerter Verteilwagen, welches die zweite Transportlage (125) auf einer Förderfläche zum zweiten Packeinheitenpuffer (129) transportiert.

25. Lagersystem nach Anspruch 24, **dadurch gekennzeichnet, dass** die Verdichtungsvorrichtung (81; 121) einen Transportlagen-Verdichtungsplatz (98; 122) und eine Ausschleusvorrichtung (99), beispielsweise eine Verschiebevorrichtung, aufweist, letztere die auf dem Bereitstellungsplatz (69; 120) zu einer Reihe (97) gebildeten Packeinheiten (2, 2') in Förderrichtung (100; 119) auf den Transportlagen-Verdichtungsplatz (98; 122) fördert.

## Claims

1. Method for the distribution of packing units (2, 2') in an automated storage system (1), wherein the packing units (2, 2') are conveyed to a staging spot (69) and formed into rows (97) in the conveying direction (70) and the rows (97) are compiled into a first transport layer (103) having several rows (97), which are received by a transport layer distribution system (107) on a conveying surface and conveyed to a first packing unit buffer (112), then the packing units (2, 2') of the transport layer (103) are received by a material handling system (114) and distributed to storage points (115), **characterized in that** after the entry of an order, in particular a commission order, the material handling system (114) takes the packing units (2, 2') required for its execution from at least one of the storage points (115) and complied into rows (97) on a second transport layer (125), which is received by an automated transport layer distribution system (107; 126), in particular a computer-controlled distribution trolley, on a conveying surface and conveyed to a loading conveyor track (147) of a loading station (145) or to a second packing unit buffer (129), with the packing units (2, 2') of the second transport layer (125) in the second packing unit buffer (129) being distributed to storage points (130) by a material handling system (133).

2. Method according to claim 1, **characterized in that** the packing units (2, 2') of a transport layer (103; 125) are distributed to one or more storage point(s) (115; 134).

3. Method according to claim 1, **characterized in** before the transport layer (103; 125) is complied, that the packing units (2, 2') are sorted in a sorting system (85).

4. Method according to claim 3, **characterized in that** with respect to the packing units (2, 2') characteristics of packing units, in particular dimensions, are captured and dimension classes are determined and that the packing units (2, 2') are allocated to the dimension classes depending on their dimension and sorted according to their dimension classes in a sorting system (85) before the transport layer (103; 125) is compiled.

5. Method according to claim 3, **characterized in that** characteristics of packing units, in particular dimensions, are captured for the packing units (2, 2') and a loading pattern of the packing units (2, 2') for a transport layer (103; 125) is determined and the packing units (2, 2') are sorted according to the loading pattern.

6. Method according to one of claims 1 to 5, **characterized in that** within a row (97) of the transport layer (103; 125) packing units (2, 2') of different dimension classes are grouped.

7. Method according to one of claims 1 to 5, **characterized in that** the packing units (2, 2') are taken from supply units and conveyed to the sorting system (85) on a material handling system (68) and/or a packing device (81) in a separated manner, the latter conveying the rows (97) one after the other from the storing place (115) to a transport layer packing place (98) and compiling them into a transport layer (103).

8. Method according to claim 1, **characterized in that** characteristics of packing units, in particular the dimensions, are captured for the packing units (2, 2') and dimension classes are assigned thereto and that a desired position of the packing units (2, 2') for a row (97) is determined and that the packing units (2, 2') are made available in the desired position on the staging spot (69).

9. Method according to claim 8, **characterized in that** an actual position of the packing units (2, 2') conveyed by means of the material handling system (68) is determined and they are brought into the desired position by means of a manipulation device (75, 76) if the actual position differs from the desired position.

10. Method according to one of claims 1 to 9, **characterized in that** the packing units (2, 2') are brought into a desired position relative to the conveying direction (70) by an alignment device (77).

11. Method according to one of claims 1 to 10, **characterized in that** the packing units (2, 2') are manipulated, in particular positioned on the conveying surface, with respect to each other with mutual distance (92, 102) within a row (97) and the rows (97) within a transport layer (103, 125).

12. Method according to one of claims 1 to 11, **characterized in that** the transport layer (103) is conveyed on a material handling system (96) forming the conveying surface from the transport layer packing place to a rearrangement place (106) whereat it is taken by an automated transport layer distribution system (107), in particular a computer-controlled distribution trolley, and by means of the latter conveyed to one of several transport layer staging spot (111) of a first packing unit buffer (112).

13. Method according to one of claims 1 to 12, **characterized in that** the packing units (2, 2') of the first transport layer (103), before being deposited in the first packing unit buffer (112) are taken onto the material handling system (114) one after another separated into rows (97) by a separation device (117) and one row (97) is in each case delivered to one of the storage points (115).

14. Method according to one of claims 1 to 12, **characterized in that** before they are deposited in the first packing unit buffer (112), the packing units (2, 2') of one row (97) of the first transport layer (103) are taken onto the material handling system (114) separated by a separation device (117) into one individual or several packing units (2, 2') and delivered to one of the storage points (115).

15. Method according to claim 14, **characterized in that** the packing units (2, 2') are delivered to the storage points (115) of the first packing unit buffer (112) after they have been sorted by the material handling system (114) according to dimension classes.

16. Method according to claim 1, **characterized in that** for forming the second transport layer (125), the packing units (2, 2') in the first packing unit buffer (112) are in each case taken from the storage points (115) in rows by means of the material handling system (114) and conveyed to a transport layer packing place (122) and compiled into a second transport layer (125) by a packing device (121).

17. Method according to claim 1, **characterized in that** for forming the second transport layer (125), individual or several packing units (2, 2') in the first packing buffer (112) are taken from one or several storage points (115) by means of the material handling system (114) and conveyed to a transport layer packing place (122) and in each case formed into rows (97) by means of a packing device (121) in its conveying direction (119) and/or the rows (97) are compiled into the second transport layer (125).

18. Method according to one of claims 1 to 17, **characterized in that** the packing units (2, 2') of one row (97) of the second transport layer (125), before being deposited in the second packing unit buffer (129) are taken onto the material handling system (133) one after another separated into rows (97) by a separation device (137) and one row (97) is in each case delivered to one of the storage points (134).

19. Method according to one of claims 1 to 17, **characterized in that** before they are deposited in the second packing unit buffer (129), the packing units (2, 2') of one row (97) of the second transport layer (125) are taken onto the material handling system (133) separated by a separation device (137) into one individual or several packing units (2, 2') and delivered to one of the storage points (134).

20. Method according to claim 19, **characterized in that** the packing units (2, 2') are delivered to the storage points (134) of the second packing unit buffer (129) by the material handling system (133) according to dimension classes.

21. Method according to claim 1, **characterized in that** all packing units (2, 2') required for an order, in particular a commission order, are deposited in the second packing unit buffer (129) and that the packing units (2, 2') are released by the material handling system (133) separated or in respective rows (97) as packing unit groups (150) and subsequently sorted by a sorting system (151) into a load sequence determined by its spatial load configuration for a load pile on a delivery container (148) and in this sequence conveyed to a loading conveyor track (147) of a loading station (145).

22. Method according to claim 1, **characterized in that** all packing units (2, 2') required for an order, in particular a commission order, are deposited in the second packing unit buffer (129) and that the packing units (2, 2') are released by the material handling system (133) respective rows (97) as packing unit groups (150) in a defined sequence and conveyed to a loading conveyor track (147) of a loading station (145).

23. Method according to claim 22, **characterized in that** the packing units (2, 2') within a packing unit group (150) are sorted by a sorting system (151) into a load sequence determined by its spatial load configuration for a load pile on a delivery container (148) and in this sequence subsequently conveyed to a loading conveyor track (147) of a loading station (145).

24. Storage system (1) in particular for executing the method according to one of claims 1 to 23, comprising
a staging spot (69) for packing units (2, 2')
a first packing device (81) for compiling the packing units (2, 2') into a first transport layer (103) having several rows (97),
a first packing unit buffer (112) having storage points (115) for the packing units (2, 2'), a transport layer distribution system (107), which transports the transport layer (103) on a conveying surface to the packing unit buffer (112), and
a material handling system (114), which distributes the packing units (2, 2') of the transport layer (103) to the storage points (115), **characterized in that**
a second packing device (121) for compiling the packing units (2, 2') into a second transport layer (125) having several rows (97) according to an order, in particular a commission order,
transports a second packing unit buffer (129) having storage points (134) for temporarily storing packing units (2, 2') related to an order and by means of a material handling system (133) for distributing the packing units (2, 2') of the second transport layer (125) to the storage points (134),
a transport layer distributing system (107; 126), in particular a computer-controlled distribution trolley, transporting the second transport layer (125) to a conveying surface to the second packing unit buffer (129).

25. Storage system according to claim 24, **characterized in that** the packing device (81; 121) has a transport layer packing place (98; 122) and a discharging device (99), for example a sliding device, the latter conveying the packing units (2, 2') formed into a row (97) on the staging point (69; 120) in conveying direction (100; 119) to the transport layer packing place (98; 122).

## Revendications

1. Procédé de répartition d'unités conditionnées (2, 2') dans un système de stockage automatique (1), dans lequel les unités conditionnées (2, 2') sont déplacées jusqu'à une zone de préparation (69) et formées en des rangées (97) dans le sens de déplacement (70) et les rangées (97) sont composées en un premier niveau de transport (103) comprenant plusieurs rangées (97), lequel est saisi par un système de répartition de niveaux de transport (107) sur une surface de déplacement et déplacé jusqu'à un premier tampon d'unités conditionnées (112), après quoi les unités conditionnées (2, 2') du niveau de transport (103) sont saisies par une mécanutention (114) et réparties dans des emplacements de stockage (115), **caractérisé en ce qu'**après l'introduction d'un ordre, en particulier d'un ordre de préparation de commande, les unités conditionnées (2, 2') nécessaires à l'exécution de cet ordre sont prélevées par la mécanutention (114) à partir d'au moins un des emplacements de stockage (115) du premier tampon d'unités conditionnées (112) et composées dans des rangées (97) en un deuxième niveau de transport (125), lequel est saisi par le système de répartition automatique de niveaux de transport (107 ; 126), en particulier un wagonnet de répartition commandé par ordinateur, sur une surface de déplacement et déplacé jusqu'à un chemin de transport d'alimentation (147) d'une station de chargement (145) ou jusqu'à un deuxième tampon d'unités conditionnées (129), étant entendu que dans le deuxième tampon d'unités conditionnées (129), les unités conditionnées (2, 2') du deuxième niveau de transport (125) sont réparties dans des emplacements de stockage (130) par une mécanutention (133).

2. Procédé selon la revendication 1, **caractérisé en ce que** les unités conditionnées (2, 2') d'un niveau de transport (103 ; 125) sont réparties dans un ou plusieurs emplacements de stockage (115 ; 134).

3. Procédé selon la revendication 1, **caractérisé en ce qu'**avant la composition du niveau de transport (103 ; 125), les unités conditionnées (2, 2') sont triées dans un dispositif de triage (85).

4. Procédé selon la revendication 3, **caractérisé en ce que** concernant les unités conditionnées (2, 2'), des caractéristiques des unités conditionnées, en particulier les dimensions, sont déterminées et des catégories de dimensions sont calculées, et **en ce que** les unités conditionnées (2, 2') sont affectées aux catégories de dimensions en fonction de leurs dimensions et triées dans un dispositif de triage (85) en fonction des catégories de dimensions avant la composition du niveau de transport (103 ; 125).

5. Procédé selon la revendication 3, **caractérisé en ce que** concernant les unités conditionnées (2, 2'), des caractéristiques des unités conditionnées, en particulier les dimensions, sont déterminées et un modèle de chargement des unités conditionnées (2, 2') est calculé pour un niveau de transport (103 ; 125) et les unités conditionnées (2, 2') sont triées en fonction du modèle de chargement.

6. Procédé selon l'une des revendications 1 à 5, **caractérisé en ce que** des unités conditionnées (2, 2') de différentes catégories de dimensions sont regroupées à l'intérieur d'une rangée (97) du niveau de transport (103 ; 125).

7. Procédé selon l'une des revendications 1 à 5, **caractérisé en ce que** les unités conditionnées (2,2') sont saisies par des unités de réserve (5) et déplacées individuellement sur une mécanutention (68) jusqu'au dispositif de triage (85) et/ou jusqu'à un dispositif de compactage (81), étant entendu que ce dernier déplace les rangées (97) l'une après l'autre depuis la zone de préparation (69) dans une zone de compactage de niveaux de transport (98) et les compose en un niveau de transport (103).

8. Procédé selon la revendication 1, **caractérisé en ce que** pour les unités conditionnées (2, 2'), des caractéristiques des unités conditionnées, en particulier les dimensions, sont déterminées et elles sont affectées à des catégories de dimensions et **en ce qu'**un niveau de consigne des unités conditionnées (2, 2') est déterminé pour une rangée (97) et **en ce que** les unités conditionnées (2, 2') sont préparées dans le niveau de consigne dans la zone de préparation (69).

9. Procédé selon la revendication 8, **caractérisé en ce qu'**un niveau effectif des unités conditionnées (2, 2') déplacées au moyen de la mécanutention (68) est déterminé et il est amené au niveau de consigne par un dispositif de manipulation (75, 76) si le niveau effectif diffère du niveau de consigne.

10. Procédé selon l'une des revendications 1 à 9, **caractérisé en ce que** les unités conditionnées (2, 2') sont amenées dans un niveau de consigne par rapport au sens de déplacement (70) par un dispositif d'orientation (77).

11. Procédé selon l'une des revendications 1 à 10, **caractérisé en ce que** les unités conditionnées (2, 2') à l'intérieur d'une rangée (97) et les rangées (97) à l'intérieur d'un niveau de transport (103, 125) sont manipulées, en particulier positionnées sur la surface de déplacement, à une distance (92, 102) réciproque l'une par rapport à l'autre.

12. Procédé selon l'une des revendications 1 à 11, **caractérisé en ce que** le premier niveau de transport (103) est déplacé sur une mécanutention (96) constituant la surface de déplacement depuis la zone de compactage des niveaux de transport (98) jusqu'à une zone de transbordement (106), il est saisi dans cette zone par un système de répartition automatique de niveaux de transport (107), en particulier un wagonnet de répartition commandé par ordinateur, et il est transporté par ce système jusqu'à une zone de préparation de niveaux de transport (111) parmi plusieurs telles zones par un premier tampon d'unités conditionnées (112).

13. Procédé selon l'une des revendications 1 à 12, **caractérisé en ce que** les unités conditionnées (2, 2') du premier niveau de transport (103), avant leur entreposage dans le premier tampon d'unités conditionnées (112), sont saisies par un dispositif de séparation (117), réparties l'une après l'autre dans des rangées (97) sur la mécanutention (114), et une rangée (97) est à chaque fois délivrée à l'un des emplacements de stockage (115).

14. Procédé selon l'une des revendications 1 à 12, **caractérisé en ce que** les unités conditionnées (2, 2') d'une rangée (97) du premier niveau de transport (103), avant leur entreposage dans le premier tampon d'unités conditionnées (112), sont saisies par un dispositif de séparation (117), réparties en unités conditionnées (2, 2') individuelles ou multiples, sur la mécanutention (114) et délivrées à l'un des emplacements de stockage (115).

15. Procédé selon la revendication 14, **caractérisé en ce que** les unités conditionnées (2, 2') sont délivrées par la mécanutention (114), triées selon les catégories de dimensions, aux emplacements de stockage (115) du premier tampon d'unités conditionnées (112).

16. Procédé selon la revendication 1, **caractérisé en ce que** pour la formation du deuxième niveau de transport (125), les unités conditionnées (2, 2') du premier tampon d'unités conditionnées (112) sont à chaque fois prélevées dans des rangées (97) depuis les emplacements de stockage (115) au moyen de la mécanutention (114) et déplacées jusqu'à une zone de compactage des niveaux de transport (122) et composées en le deuxième niveau de transport (125) par un dispositif de compactage (121).

17. Procédé selon la revendication 1, **caractérisé en ce que** pour la formation du deuxième niveau de transport (125), des unités conditionnées (2, 2') individuelles ou multiples du premier tampon d'unités conditionnées (112) sont prélevées depuis un ou plusieurs emplacements de stockage (115) au moyen de la mécanutention (114) et déplacées jusqu'à une zone de compactage des niveaux de transport (122) et formées respectivement en des rangées (97) par un dispositif de compactage (121) dans ce sens de déplacement (119) et/ou les rangées (97) sont composées en le deuxième niveau de transport (125).

18. Procédé selon l'une des revendications 1 à 17, **caractérisé en ce que** les unités conditionnées (2, 2') du deuxième niveau de transport (125), avant leur entreposage dans le deuxième tampon d'unités conditionnées (129), sont saisies par un dispositif de séparation (137), réparties l'une après l'autre dans des rangées (97) sur la mécanutention (133), et une rangée (97) est à chaque fois délivrée à l'un des emplacements de stockage (134).

19. Procédé selon l'une des revendications 1 à 17, **caractérisé en ce que** les unités conditionnées (2, 2') d'une rangée (97) du deuxième niveau de transport (125), avant leur entreposage dans le deuxième tampon d'unités conditionnées (129), sont saisies par un dispositif de séparation (137), réparties en unités conditionnées (2, 2') individuelles ou multiples, sur la mécanutention (133) et délivrées à l'un des emplacements de stockage (134).

20. Procédé selon la revendication 19, **caractérisé en ce que** les unités conditionnées (2, 2') sont délivrées par la mécanutention (133), triées selon les catégories de dimensions, aux emplacements de stockage (134) du deuxième tampon d'unités conditionnées (129).

21. Procédé selon la revendication 1, **caractérisé en ce que** toutes les unités conditionnées (2, 2') nécessaires pour un ordre, en particulier un ordre de préparation de commande, sont entreposées dans le deuxième tampon d'unités conditionnées (129) et **en ce que** les unités conditionnées (2, 2') sont extraites par la mécanutention (133), individuellement ou respectivement en rangées (97), comme groupes d'unités conditionnées (150) et sont ensuite triées par un dispositif de triage (151) dans un ordre de chargement déterminé par sa configuration de chargement géométrique pour une pile de niveaux sur un conteneur de livraison (148) et déplacées dans cet ordre jusqu'à un chemin de transport d'alimentation (147) d'une station de chargement (145).

22. Procédé selon la revendication 1, **caractérisé en ce que** toutes les unités conditionnées (2, 2') nécessaires pour un ordre, en particulier un ordre de préparation de commande, sont entreposées dans le deuxième tampon d'unités conditionnées (129) et **en ce que** les unités conditionnées (2, 2') sont à chaque extraites par la mécanutention (133) en rangée (97) comme groupes d'unités conditionnées (150), triées dans un ordre défini, et déplacées jusqu'à un chemin de transport d'alimentation (147) d'une station de chargement (145).

23. Procédé selon la revendication 22, **caractérisé en ce que** les unités conditionnées (2, 2') à l'intérieur d'un groupe d'unités conditionnées (150) sont triées par un dispositif de triage (151) dans un ordre de chargement déterminé par sa configuration de chargement géométrique pour une pile de niveaux sur un conteneur de livraison (148) et déplacées ensuite dans cet ordre jusqu'à un chemin de transport d'alimentation (147) d'une station de chargement (145).

24. Système de stockage (1), en particulier pour la mise en oeuvre du procédé selon l'une des revendications 1 à 23, comprenant :
une zone de préparation (69) pour des unités conditionnées (2, 2') ;
un premier dispositif de compactage (81) pour composer les unités conditionnées (2, 2') en un premier niveau de transport (103) comprenant plusieurs rangées (97) ;
un premier tampon d'unités conditionnées (112) comprenant des emplacements de stockage (115) pour les unités conditionnées (2, 2') ;
un système de répartition de niveaux de transport (107), qui transporte le niveau de transport (103) sur une surface de déplacement jusqu'au tampon d'unités conditionnées (112) ; et
une mécanutention (114), qui répartit les unités conditionnées (2, 2') du niveau de transport (103) dans les emplacements de stockage (115) ; **caractérisé par** :
un deuxième dispositif de compactage (121) destiné à composer les unités conditionnées (2, 2') en un deuxième niveau de transport (125) comprenant plusieurs rangées (97) conformément à un ordre, en particulier un ordre de préparation de commande ;
un deuxième tampon d'unités conditionnées (129) comprenant des emplacements de stockage (134) pour le stockage temporaire d'unités conditionnées (2, 2') afférentes à un ordre et comprenant une mécanutention (133) destinée à répartir les unités conditionnées (2, 2') du deuxième niveau de transport (125) dans les emplacements de stockage (134) ;
un système de répartition de niveaux de transport (107 ; 126), en particulier un wagonnet de répartition commandé par ordinateur, qui transporte le deuxième niveau de transport (125) sur une surface de déplacement jusqu'au deuxième tampon d'unités conditionnées (129).

25. Système de stockage selon la revendication 24, **caractérisé en ce que** le dispositif de compactage (81 ; 121) présente une zone de compactage de niveaux de transport (98 ; 122) et un dispositif d'éjection (99), par exemple un dispositif de manoeuvre, étant entendu que ce dernier déplace les unités conditionnées (2, 2') formées en une rangée (97) dans la zone de préparation (69 ; 120) dans le sens de déplacement (100 ; 119) dans la zone de compactage de niveaux de transport (98 ; 122).
